# EUROPEAN PATENT APPLICATION

(11) **EP 4 564 966 A1**
(43) Date of publication of application: **04.06.2025**
(21) Application number: 23851861.7
(22) Date of filing: 09.08.2023
(51) Int. Cl.: H04W 72/04

(54) **TRANSMISSION CONFIGURATION INDICATOR (TCI) MODE CONFIGURATION METHOD, TCI STATE INDICATION METHOD, AND APPARATUS**

(30) Priority: 09.08.2022 CN 202210952478
(71) Applicant: Huawei Technologies Co., Ltd., Shenzhen, Guangdong 518129 (CN)
(72) Inventor: YUAN, Shitong, Shenzhen, Guangdong 518129 (CN); FAN, Bo, Shenzhen, Guangdong 518129 (CN); LI, Fang, Shenzhen, Guangdong 518129 (CN); CHEN, Lei, Shenzhen, Guangdong 518129 (CN)
(74) Representative: Maiwald GmbH
(86) International application number: PCT/CN2023/111866
(87) International publication number: WO 2024/032640

(57) **Abstract**

Embodiments of this application disclose a transmission configuration indicator TCI mode configuration method, a TCI state indication method, and a related apparatus, so that a network device configures, for a terminal device, a TCI mode associated with a control resource set. Therefore, the network device configures a TCI mode for the terminal device at a control resource set level. This helps the network device more flexibly configure or indicate a beam for the terminal device, thereby improving communication transmission performance. The method in embodiments of this application includes: A terminal device receives configuration information from a network device, where the configuration information includes a correspondence between at least one control resource set of the terminal device and a TCI mode, and the TCI mode includes a joint mode or a separate mode; and the terminal device determines, based on the configuration information, the TCI mode corresponding to the at least one control resource set.

## Description

This application claims priority to Chinese Patent Application No. 202210952478.9, filed with the China National Intellectual Property Administration on August 9, 2022 and entitled "TRANSMISSION CONFIGURATION INDICATOR TCI MODE CONFIGURATION METHOD, TCI STATE INDICATION METHOD, AND APPARATUS", which is incorporated herein by reference in its entirety.

### TECHNICAL FIELD

This application relates to the field of communication technologies, and in particular, to a transmission configuration indicator (transmission configuration indicator, TCI) mode configuration method, a TCI state indication method, and an apparatus.

### BACKGROUND

In a 5th generation (5th generation, 5G) mobile communication system, high-frequency communication may be used, that is, data is transmitted by using a super high frequency band (>6 GHz) signal. A main problem of the high-frequency communication is that energy of a signal sharply decreases as a transmission distance increases, resulting in a short transmission distance of the signal. To resolve this problem, an analog beam technology is used in the high-frequency communication. Weighted processing is performed on an antenna array, the signal energy is concentrated in a small angle range, to form a signal similar to a light beam (referred to as an analog beam, a beam for short), so that the transmission distance is extended.

Currently, a network device may configure a beam mode for a serving cell in which a terminal device is located. The terminal device may determine, based on the beam mode, a beam indicated by the network device for the terminal device, and then perform communication transmission with the network device by using the beam.

Therefore, how the network device configures the beam mode for the terminal device to improve performance of transmission between the network device and the terminal device is a problem worth considering.

### SUMMARY

This application provides a TCI mode configuration method, a TCI state indication method, and an apparatus, so that a network device configures, for a terminal device, a TCI mode associated with a control resource set, to configure a TCI mode for the terminal device at a control resource set level, thereby improving communication transmission performance.

A first aspect of this application provides a TCI mode configuration method, including:
A terminal device receives configuration information from a network device, where the configuration information includes a correspondence between at least one control resource set of the terminal device and a TCI mode, and the TCI mode includes a joint mode or a separate mode; and then, the terminal device determines, based on the configuration information, the TCI mode corresponding to the at least one control resource set.

In the foregoing technical solution, the terminal device receives the configuration information from the network device, where the configuration information includes the correspondence between the at least one control resource set of the terminal device and the TCI mode. The terminal device determines, based on the configuration information, the TCI mode corresponding to the at least one control resource set. Because each of the at least one control resource set corresponds to one transmission and reception point (transmission and reception point, TRP), different control resource sets correspond to different TRPs. The TRP corresponding to the at least one control resource set is a TRP that provides a service for the terminal device. Therefore, the network device may configure a corresponding TCI mode for each TRP based on the configuration information, and configure a TCI mode for the terminal device at a TRP level (or a control resource set level). This helps the network device configure an appropriate TCI mode for each TRP, thereby improving communication transmission performance. Further, this helps the network device more flexibly configure or indicate a beam for the terminal device.

A second aspect of this application provides a TCI mode configuration method, including:
A network device determines configuration information, where the configuration information includes a correspondence between at least one control resource set of a terminal device and a TCI mode, and the TCI mode includes a joint mode or a separate mode; and the network device sends the configuration information to the terminal device.

In the foregoing technical solution, the network device configures the correspondence between the at least one control resource set and the TCI mode for the terminal device based on the configuration information. Because each of the at least one control resource set corresponds to one TRP, different control resource sets correspond to different TRPs. The TRP corresponding to the at least one control resource set is a TRP that provides a service for the terminal device. Therefore, the network device may configure a corresponding TCI mode for each TRP based on the configuration information, and configure a TCI mode for the terminal device at a TRP level (or a control resource set level). This helps the network device configure an appropriate TCI mode for each TRP, thereby improving communication transmission performance. Further, this helps the network device more flexibly configure or indicate a beam for the terminal device.

Based on the first aspect or the second aspect, in a possible implementation, the at least one control resource set belongs to at least one control resource set pool, and the configuration information includes a correspondence between an index of the at least one control resource set pool and the TCI mode.

In this implementation, the network device may configure a corresponding TCI mode for each control resource set of the terminal device based on the correspondence between the index of the at least one control resource set pool and the TCI mode. In this way, flexibility of indicating or activating a beam by the network device for the terminal device is improved, and communication transmission performance is improved.

Based on the first aspect or the second aspect, in a possible implementation, each of the at least one control resource set corresponds to one TCI mode.

In this implementation, each control resource set corresponds to one TCI mode. Because each control resource set corresponds to one TRP, the network device configures a corresponding TCI mode for each TRP. This helps configure an applicable TCI mode for the TRP, thereby improving communication transmission performance.

Based on the first aspect or the second aspect, in a possible implementation, each of the at least one control resource set corresponds to one TRP.

In this implementation, because each control resource set corresponds to one TRP, the network device configures a corresponding TCI mode for each TRP. This helps configure an applicable TCI mode for the TRP, thereby improving communication transmission performance.

A third aspect of this application provides a TCI mode configuration method, including:
A terminal device receives configuration information from a network device, where the configuration information includes information about control resource sets that are of a terminal device and that are associated with M TCI state lists, the M TCI state lists include an uplink transmission configuration indicator (uplink transmission configuration indicator, UL TCI) state list and/or a joint or downlink transmission configuration indicator (joint downlink transmission configuration indicator, joint/DL TCI) state list, and M is an integer greater than or equal to 1; and the terminal device determines, based on the configuration information, TCI modes corresponding to the control resource sets associated with the M TCI state lists, where the TCI mode includes a joint mode or a separate mode.

In the foregoing technical solution, the terminal device receives the configuration information sent by the network device. The configuration information includes the information about the control resource sets associated with the M TCI state lists. One control resource set corresponds to one TRP. For a TRP that uses a separate mode, the network device needs to associate a control resource set corresponding to the TRP with one UL TCI state list and one joint/DL TCI state list. For a TRP in a joint mode, the network device needs to associate a control resource set corresponding to the TRP with one joint/DL TCI state list. Therefore, the network device may indirectly or implicitly configure, based on the control resource sets associated with the M TCI state lists, the TCI modes corresponding to the control resource sets. Therefore, the network device configures a TCI mode for the terminal device at a TRP level (a control resource set level). This helps the network device configure an appropriate TCI mode for each TRP, thereby improving communication transmission performance. Further, this helps the network device more flexibly configure or indicate a beam for the terminal device.

A fourth aspect of this application provides a TCI mode configuration method, including:
A network device determines configuration information, where the configuration information includes information about control resource sets that are of a terminal device and that are associated with M TCI state lists, the M TCI state lists include a UL TCI state list and/or a joint/DL TCI state list, and M is an integer greater than or equal to 1; and the network device sends the configuration information to the terminal device.

In the foregoing technical solution, for a TRP that uses a separate mode, the network device needs to associate a control resource set corresponding to the TRP with one UL TCI state list and one joint/DL TCI state list. For a TRP in a joint mode, the network device needs to associate a control resource set corresponding to the TRP with one joint/DL TCI state list. One control resource set corresponds to one TRP. The network device may indirectly or implicitly configure, based on the control resource sets associated with the M TCI state lists, the TCI modes corresponding to the control resource sets. Therefore, the network device configures a TCI mode for the terminal device at a TRP level (a control resource set level). This helps the network device configure an appropriate TCI mode for each TRP, thereby improving communication transmission performance. Further, this helps the network device more flexibly configure or indicate a beam for the terminal device.

Based on the third aspect or the fourth aspect, in a possible implementation, the control resource sets associated with the M TCI state lists belong to one or more control resource set pools, and the configuration information includes an index of the one or more control resource set pools.

In this implementation, the network device may configure a corresponding TCI mode for each control resource set of the terminal device based on information about control resource set pools associated with the M TCI state lists. In this way, flexibility of indicating or activating a beam by the network device for the terminal device is improved, and communication transmission performance is improved.

Based on the third aspect or the fourth aspect, in a possible implementation, the control resource sets associated with the M TCI state lists include a first control resource set.

If a TCI mode associated with the first control resource set is a separate mode, the first control resource set is associated with one UL TCI state list and one joint/DL TCI state list in the M TCI state lists; or
if a TCI mode associated with the first control resource set is a joint mode, the first control resource set is associated with one joint/DL TCI state list in the M TCI state lists.

In this implementation, a TCI state list associated with the first control resource set is described based on the TCI mode, so that the terminal device determines, based on the TCI state list associated with the first control resource set, a TCI mode used for a TRP corresponding to the first control resource set.

Based on the third aspect or the fourth aspect, in a possible implementation, the method further includes:
The terminal device determines that a second control resource set is associated with a first TCI mode, where the first TCI mode is a TCI mode configured for a cell in which the terminal device is located, and the second control resource set is a control resource set of the terminal device other than the control resource sets associated with the M TCI state lists; or
if the second control resource set is a control resource set of the terminal device other than the control resource sets associated with the M TCI state lists, the terminal device determines that a TCI mode corresponding to the second control resource set is a TCI mode configured for a cell in which the terminal device is located.

In this implementation, for a second control resource set for which the network device does not explicitly configure a TCI mode or a second control resource set for which no associated TCI state list is configured, the terminal device may use, by default, a cell-specific first TCI mode as the TCI mode corresponding to the second control resource set.

Based on the third aspect or the fourth aspect, in a possible implementation, each of the control resource sets associated with the M TCI state lists corresponds to one TRP.

In this implementation, because each control resource set corresponds to one TRP, the network device configures a corresponding TCI mode for each TRP. This helps configure an applicable TCI mode for the TRP, thereby improving communication transmission performance.

A fifth aspect of this application provides a TCI mode configuration method, including:
A terminal device receives first information from a network device, where the first information indicates a TCI mode associated with at least one first TCI state, and the at least one first TCI state is activated by the network device for the terminal device; and the terminal device determines, based on the first information, the TCI mode associated with the at least one first TCI state.

In the foregoing technical solution, the terminal device receives the first information from the network device. The first information indicates the TCI mode associated with the at least one first TCI state. The at least one first TCI state may be a TCI state corresponding to a specific TRP. Therefore, the network device configures a TCI mode for the terminal device at a TRP level (or a TCI state level). This helps the network device configure an appropriate TCI mode for each TRP, thereby improving communication transmission performance. Further, this helps the network device more flexibly configure or indicate a beam for the terminal device.

Based on the fifth aspect, in a possible implementation, the method further includes:
The terminal device receives second information from the network device, where the second information indicates a TCI mode associated with at least one second TCI state, and the at least one second TCI state is activated or indicated by the network device for the terminal device; and the terminal device determines, based on the second information, the TCI mode associated with the at least one second TCI state.

In this implementation, the first information indicates the TCI mode associated with the at least one first TCI state. The second information indicates the TCI mode associated with the at least one second TCI state. It may be understood that the at least one first TCI state is a TCI state corresponding to a first TRP. The at least one second TCI state is a TCI state corresponding to a second TRP. Therefore, the first information indicates a TCI mode of the first TRP. The second information indicates a TCI mode of the second TRP. Therefore, the network device configures a corresponding TCI mode for each TRP at a TRP level (or a TCI state level). This helps the network device configure an appropriate TCI mode for each TRP, thereby improving communication transmission performance. Further, this helps the network device more flexibly configure or indicate a beam for the terminal device.

A sixth aspect of this application provides a TCI mode configuration method, including:
A network device determines first information, where the first information indicates a TCI mode associated with at least one first TCI state, and the at least one first TCI state is activated by the network device for a terminal device; and the network device sends the first information to the terminal device.

In the foregoing technical solution, the network device sends the first information to the terminal device. The first information indicates the TCI mode associated with the at least one first TCI state. The at least one first TCI state may be a TCI state corresponding to a specific TRP. Therefore, the network device configures a TCI mode for the terminal device at a TRP level (or a TCI state level). This helps the network device configure an appropriate TCI mode for each TRP, thereby improving communication transmission performance. Further, this helps the network device more flexibly configure or indicate a beam for the terminal device.

Based on the sixth aspect, in a possible implementation, the method further includes:
The network device sends second information to the terminal device, where the second information indicates a TCI mode associated with at least one second TCI state, and the at least one second TCI state is activated by the network device for the terminal device.

In this implementation, the first information indicates the TCI mode associated with the at least one first TCI state. The second information indicates the TCI mode associated with the at least one second TCI state. It may be understood that the at least one first TCI state is a TCI state corresponding to a first TRP. The at least one second TCI state is a TCI state corresponding to a second TRP. Therefore, the first information indicates a TCI mode of the first TRP. The second information indicates a TCI mode of the second TRP. Therefore, the network device configures a corresponding TCI mode for each TRP at a TRP level (or a TCI state level). This helps the network device configure an appropriate TCI mode for each TRP, thereby improving communication transmission performance. Further, this helps the network device more flexibly configure or indicate a beam for the terminal device.

Based on the fifth aspect or the sixth aspect, in a possible implementation, the at least one first TCI state and the at least one second TCI state are activated by the network device for the terminal device by using a same media access control control element (media access control control element, MAC CE) or same downlink control information (downlink control information, DCI).

Based on the fifth aspect or the sixth aspect, in a possible implementation, the at least one first TCI state and the at least one second TCI state form at least one group of TCI states.

A quantity of TCI states included in each group of TCI states in the at least one group of TCI states is determined based on the TCI mode associated with the at least one first TCI state and the TCI mode associated with the at least one first TCI state.

Based on the fifth aspect or the sixth aspect, in a possible implementation, the at least one first TCI state and the at least one second TCI state form at least one group of TCI states.

A quantity of first TCI states included in each group of TCI states in the at least one group of TCI states is determined based on the TCI mode associated with the at least one first TCI state; and
a quantity of second TCI states included in each group of TCI states in the at least one group of TCI states is determined based on the TCI mode associated with the at least one first TCI state.

Based on the fifth aspect or the sixth aspect, in a possible implementation, if the at least one first TCI state is associated with a joint mode and the at least one second TCI state is associated with a separate mode, each group of TCI states in the at least one group of TCI states includes one first TCI state and one or two second TCI states;
if the at least one first TCI state is associated with a separate mode and the at least one second TCI state is associated with a joint mode, each group of TCI states in the at least one group of TCI states includes one or two first TCI states and one first TCI state;
if the at least one first TCI state and the at least one second TCI state are both associated with a joint mode, each group of TCI states in the at least one group of TCI states includes one first TCI state and one second TCI state; or
if the at least one first TCI state and the at least one second TCI state are both associated with a separate mode, each group of TCI states in the at least one group of TCI states includes one or two first TCI states and one or two second TCI states.

Based on the fifth aspect or the sixth aspect, in a possible implementation, the at least one first TCI state is the TCI state corresponding to the first TRP, and the first TRP is for performing communication transmission with the terminal device.

Based on the fifth aspect or the sixth aspect, in a possible implementation, the at least one second TCI state is the TCI state corresponding to the second TRP, and the second TRP is for performing communication transmission with the terminal device.

A seventh aspect of this application provides a TCI mode configuration method, including:
A terminal device receives a MAC CE from a network device, where the MAC CE includes a first field and a second field, the first field indicates an index of a control resource set pool to which a first control resource set of the terminal device belongs, and the second field indicates a TCI mode associated with the first control resource set; and the terminal device determines, based on the MAC CE, the TCI mode associated with the first control resource set.

In the foregoing technical solution, the terminal device receives the MAC CE from the network device. The MAC CE includes the first field and the second field, the first field indicates the index of the control resource set pool to which the first control resource set of the terminal device belongs, and the second field indicates the TCI mode associated with the first control resource set. The terminal device determines, based on the MAC CE, the TCI mode associated with the first control resource set. The first control resource set corresponds to one TRP. Therefore, the network device configures a TCI mode for the terminal device at a TRP level (or a control resource set level). This helps the network device configure an appropriate TCI mode for each TRP, thereby improving communication transmission performance. Further, this helps the network device more flexibly configure or indicate a beam for the terminal device.

An eighth aspect of this application provides a TCI mode configuration method, including:
A network device determines a MAC CE, where the MAC CE includes a first field and a second field, the first field indicates an index of a control resource set pool to which a first control resource set of a terminal device belongs, and the second field indicates a TCI mode associated with the first control resource set; and the network device sends the MAC CE to the terminal device.

In the foregoing technical solution, the network device sends the MAC CE to the terminal device. The MAC CE includes the first field and the second field, the first field indicates the index of the control resource set pool to which the first control resource set of the terminal device belongs, and the second field indicates the TCI mode associated with the first control resource set. The first control resource set corresponds to one TRP. Therefore, the network device configures a TCI mode for the terminal device at a TRP level (or a control resource set level). This helps the network device configure an appropriate TCI mode for each TRP, thereby improving communication transmission performance. Further, this helps the network device more flexibly configure or indicate a beam for the terminal device.

Based on the seventh aspect or the eighth aspect, in a possible implementation, the first control resource set corresponds to one transmission and reception point TRP.

A ninth aspect of this application provides a TCI mode configuration method, including:
A terminal device receives a MAC CE from a network device, where the MAC CE includes a first field, the first field indicates a TCI mode associated with a first TCI state in each of N groups of TCI states, the N groups of TCI states are TCI states activated by the network device for the terminal device, and N is an integer greater than or equal to 1; and the terminal device determines, based on the MAC CE, the TCI mode associated with the first TCI state in each of the N groups of TCI states.

In the foregoing technical solution, the terminal device receives the MAC CE from the network device. The MAC CE includes the first field, and the first field indicates the TCI mode associated with the first TCI state in each of the N groups of TCI states. The first TCI state in each group of TCI states is a TCI state corresponding to a first TRP. Therefore, the network device configures a TCI mode for the terminal device at a TRP level (or a TCI state level). This helps the network device configure an appropriate TCI mode for each TRP, thereby improving communication transmission performance. Further, this helps the network device more flexibly configure or indicate a beam for the terminal device.

A tenth aspect of this application provides a TCI mode configuration method, including:
A network device determines a MAC CE, where the MAC CE includes a first field, the first field indicates a TCI mode associated with a first TCI state in each of N groups of TCI states, and the N groups of TCI states are activated by the network device for a terminal device; and the network device sends the MAC CE to the terminal device.

In the foregoing technical solution, the network device may configure the TCI mode for the first TCI state in each group of TCI states. The first TCI state in each group of TCI states is a TCI state corresponding to a first TRP. Therefore, the network device configures a TCI mode for the terminal device at a TRP level (or a TCI state level). This helps the network device configure an appropriate TCI mode for each TRP, thereby improving communication transmission performance. Further, this helps the network device more flexibly configure or indicate a beam for the terminal device.

Based on the ninth aspect or the tenth aspect, in a possible implementation, the MAC CE further includes a second field, and the second field indicates a TCI mode associated with a second TCI state in each of the N groups of TCI states.

In this implementation, the first field indicates the TCI mode associated with the first TCI state in each of the N groups of transmission configuration indicator TCI states. The second field indicates the TCI mode associated with the second TCI state in each of the N groups of TCI states. It may be understood that the first TCI state in each group of TCI states is the TCI state corresponding to the first TRP. The second TCI state in each group of TCI states is a TCI state corresponding to a second TRP. Therefore, the first field indicates a TCI mode of the first TRP, and the second field indicates a TCI mode of the second TRP. Therefore, the network device configures a corresponding TCI mode for each TRP at a TRP level (or a TCI state level). This helps the network device configure an appropriate TCI mode for each TRP, thereby improving communication transmission performance. Further, this helps the network device more flexibly configure or indicate a beam for the terminal device.

Based on the ninth aspect or the tenth aspect, in a possible implementation, the first TCI state in each group of TCI states is the TCI state corresponding to the first TRP, and the second TCI state in each group of TCI states is the TCI state corresponding to the second TRP. Therefore, the network device configures a corresponding TCI mode for each TRP at a TRP level.

An eleventh aspect of this application provides a TCI state indication method, including:
A terminal device receives indication information from a network device, where the indication information indicates a TCI state identifier; the terminal device determines a TCI state list to which the TCI state identifier belongs, where the TCI state list is associated with a first control resource set of the terminal device; and the terminal device determines that the TCI state identifier is a TCI state identifier corresponding to the first control resource set.

In the foregoing technical solution, the terminal device may determine the TCI state list to which the TCI state identifier indicated by the network device uniquely belongs. The TCI state list is associated with the first control resource set of the terminal device. Therefore, the terminal device can determine that the TCI state identifier is the TCI state identifier corresponding to the first control resource set. The first control resource set corresponds to a first TRP, and the first TRP is for performing communication transmission with the terminal device. Therefore, the network device implicitly or indirectly indicates, to the terminal device, a TCI state for the first control resource set or the first TRP.

Based on the eleventh aspect, in a possible implementation, the method further includes:
The terminal device receives first configuration information from the network device, where the first configuration information includes a plurality of TCI state lists configured by the network device for the terminal device, the plurality of TCI state lists include P UL TCI state lists and Q DL/joint TCI state lists, TCI state identifiers in different UL TCI state lists in the P UL TCI state lists are different, and TCI state identifiers in different DL/joint TCI state lists in the Q DL/joint TCI state lists are different, where P is an integer greater than or equal to 2, and Q is an integer greater than or equal to 2.

In this implementation, the terminal device may obtain the plurality of TCI state lists configured by the network device. In TCI state lists of a same type, TCI state identifiers in different TCI state lists are different, that is, are globally unique. In this way, the terminal device determines the specific TCI state list to which the TCI state identifier indicated by the network device uniquely belongs.

Based on the eleventh aspect, in a possible implementation, each of the P UL TCI state lists is associated with one control resource set of the terminal device, different UL TCI state lists are associated with different control resource sets, each of the Q DL/joint TCI state lists is associated with one control resource set of the terminal device, and different DL/joint TCI state lists are associated with different control resource sets.

In this implementation, each TCI state list is associated with one control resource set. In TCI state lists of a same type, different TCI state lists are associated with different control resource sets. In this way, the terminal device can determine a specific control resource set whose TCI state identifier is the TCI state identifier indicated by the network device. The control resource set corresponds to one TRP. Therefore, the terminal device can determine a specific TRP whose TCI state identifier is indicated by the network device.

Based on the eleventh aspect, in a possible implementation, in the P UL TCI state lists, a UL TCI state list whose index is 0 is associated with the first control resource set of the terminal device, and a UL TCI state list whose index is 1 is associated with a second control resource set of the terminal device; and in the Q DL/joint TCI state lists, a DL/joint TCI state list whose index is 0 corresponds to the first control resource set, and a DL/joint TCI state list whose index is 1 corresponds to the second control resource set. In this implementation, the terminal device may determine, according to a default rule, a control resource set associated with each TCI state list. No signaling indication is required, thereby avoiding signaling overheads.

Based on the eleventh aspect, in a possible implementation, the method further includes:
The terminal device receives second configuration information from the network device, where the second configuration information includes an association relationship between the plurality of TCI state lists and control resource sets of the terminal device.

In this implementation, the terminal device may receive, from the network device, the association relationship between the plurality of TCI state lists and the control resource sets of the terminal device. In this way, the terminal device can determine a specific control resource set whose TCI state identifier is the TCI state identifier indicated by the network device. Therefore, the network device indicates a corresponding TCI state identifier for each control resource set or each TRP.

A twelfth aspect of this application provides a TCI state indication method, including:
A network device determines first configuration information, where the first configuration information includes a plurality of TCI state lists configured by the network device for a terminal device, the plurality of TCI state lists include P UL TCI state lists and Q DL/joint TCI state lists, TCI state identifiers in different UL TCI state lists in the P UL TCI state lists are different, and TCI state identifiers in different DL/joint TCI state lists in the Q DL/joint TCI state lists are different, where P is an integer greater than or equal to 2, and Q is an integer greater than or equal to 2; and the network device sends the first configuration information to the terminal device.

In the foregoing technical solution, the network device may configure the plurality of TCI state lists for the terminal device. In TCI state lists of a same type, TCI state identifiers in different TCI state lists are different, that is, are globally unique. In this way, the terminal device determines the specific TCI state list to which the TCI state identifier indicated by the network device uniquely belongs.

Based on the twelfth aspect, in a possible implementation, each of the P UL TCI state lists is associated with one control resource set of the terminal device, different UL TCI state lists are associated with different control resource sets, each of the Q DL/joint TCI state lists is associated with one control resource set of the terminal device, and different DL/joint TCI state lists are associated with different control resource sets.

In this implementation, each TCI state list is associated with one control resource set. In TCI state lists of a same type, different TCI state lists are associated with different control resource sets. In this way, the terminal device can determine a specific control resource set whose TCI state identifier is the TCI state identifier indicated by the network device. The control resource set corresponds to one TRP. Therefore, the terminal device can determine a specific TRP whose TCI state identifier is indicated by the network device.

Based on the twelfth aspect, in a possible implementation, in the P UL TCI state lists, a UL TCI state list whose index is 0 is associated with the first control resource set of the terminal device, and a UL TCI state list whose index is 1 is associated with a second control resource set of the terminal device; and in the Q DL/joint TCI state lists, a DL/joint TCI state list whose index is 0 corresponds to the first control resource set, and a DL/joint TCI state list whose index is 1 corresponds to the second control resource set. In this implementation, the network device determines, according to a default rule, a control resource set associated with each TCI state list. No signaling indication is required, thereby avoiding signaling overheads.

Based on the twelfth aspect, in a possible implementation, the method further includes:
The network device sends second configuration information to the terminal device, where the second configuration information includes an association relationship between the plurality of TCI state lists and control resource sets of the terminal device.

In this implementation, the network device configures, for the terminal device, the association relationship between the plurality of TCI state lists and the control resource sets of the terminal device. In this way, the terminal device can determine a specific control resource set whose TCI state identifier is the TCI state identifier indicated by the network device. Therefore, the network device indicates a corresponding TCI state identifier for each control resource set or each TRP.

A thirteenth aspect of this application provides a TCI state indication method, including:
A terminal device receives a MAC CE from a network device, where the MAC CE includes a first field and a second field, the first field and the second field jointly indicate a TCI state, a length of the first field is A bits, a length of the second field is B bits, A plus B is greater than or equal to 8, and both A and B are integers greater than or equal to 1; and the terminal device determines the TCI state based on the MAC CE.

In the foregoing technical solution, the terminal device receives the MAC CE sent by the network device. The MAC CE includes the first field and the second field. The first field and the second field jointly indicate the TCI state, the length of the first field is A bits, and the length of the second field is B bits. A plus B is greater than or equal to 8. In this way, when a quantity of TCI states configured by the network device for the terminal device exceeds 128, the network device may indicate the TCI states by using a MAC CE.

A fourteenth aspect of this application provides a TCI state indication method, including:
A network device determines a MAC CE, where the MAC CE includes a first field and a second field, the second field and the second field jointly indicate a TCI state, a length of the first field is A bits, a length of the second field is B bits, A plus B is greater than or equal to 8, and both A and B are integers greater than or equal to 1; and the network device sends the MAC CE to the terminal device.

In the foregoing technical solution, the network device sends the MAC CE to the terminal device. The MAC CE includes the first field and the second field. The first field and the second field jointly indicate the TCI state, the length of the first field is A bits, and the length of the second field is B bits. A plus B is greater than or equal to 8. In this way, when a quantity of TCI states configured by the network device for the terminal device exceeds 128, the network device may indicate the TCI states by using a MAC CE.

Based on the thirteenth aspect or the fourteenth aspect, in a possible implementation, the first field M is 1 bit, the second field M is 7 bits. The first field is a most significant bit in bits indicating the TCI state, and the second field is a bit other than the most significant bit in the bits indicating the TCI state. Alternatively, the first field is a least significant bit in bits indicating the TCI state, and the second field is a bit other than the least significant bit in the bits indicating the TCI state.

In this implementation, each row in a current MAC CE includes 8 bits, and the 1^{st} bit is a downlink or uplink (downlink/uplink, D/U) field, to indicate whether the last 7 bits indicate a DL TCI state or a UL TCI state. The last 7 bits indicate a TCI state identifier. It can be learned that the last 7 bits can indicate a maximum TCI state identifier 128. If the quantity of TCI states configured by the network device for the terminal device exceeds 128, the last 7 bits in each row in the current MAC CE cannot indicate one TCI state. Therefore, in the technical solution of this application, when the network device configures more than 128 TCI states and no more than 256 TCI states for the terminal device, the first field is added. The first field and the second field jointly indicate the TCI states, to resolve the foregoing problem.

Based on the thirteenth aspect or the fourteenth aspect, in a possible implementation, the first field and the second field are discontinuous.

A fifteenth aspect of this application provides a TCI state indication method, including:
A terminal device receives a MAC CE from a network device, where the MAC CE includes one or more field groups, each field group corresponds to one codepoint, the codepoint is mapped to a plurality of TCI states, each field group includes a first field and a second field, the first field indicates whether the network device uses a TCI state of a first TRP included in the plurality of TCI states as an updated TCI state of the first TRP, the second field in each field group indicates whether the network device uses, as an updated TCI state of a second TRP, a TCI state of the second TRP included in the TCI states mapped by the codepoint corresponding to the field group; and the terminal device determines, based on the MAC CE, an updated TCI state of a specific TRP corresponding to a codepoint corresponding to the one or more field groups.

In the foregoing technical solution, the terminal device determines, based on the one or more field groups in the MAC CE, a specific TRP whose TCI state is updated corresponding to a codepoint corresponding to each field group. The network device activates at least one group of TCI states based on the MAC CE, where each group of TCI states is TCI states mapped by one codepoint. When the network device subsequently indicates a TCI state to the terminal device based on DCI, a value of a TCI field in the DCI is a value of a specific codepoint. The terminal device may determine, based on the value of the TCI field, a specific TRP whose TCI state is indicated or updated by the network device. In this way, an updated TCI state of a TRP corresponding to each codepoint is flexible and variable. Flexibility of indicating, by the network device, the TCI state to the terminal device is improved.

A sixteenth aspect of this application provides a TCI state indication method, including:
A network device determines a MAC CE, where the MAC CE includes one or more field groups, each field group corresponds to one codepoint, the codepoint is mapped to a plurality of TCI states, each field group includes a first field and a second field, the first field indicates whether the network device uses a TCI state of a first TRP included in the plurality of TCI states as an updated TCI state of the first TRP, the second field in each field group indicates whether the network device uses, as an updated TCI state of a second TRP, a TCI state of the second TRP included in the TCI states mapped by the codepoint corresponding to the field group; and the network device sends the MAC CE to the terminal device.

In the foregoing technical solution, the network device may send the MAC CE to the terminal device. The MAC CE includes the feature listed in the sixteenth aspect. In this way, the terminal device determines, based on the one or more field groups in the MAC CE, a specific TRP whose TCI state is updated corresponding to a codepoint corresponding to each field group. The network device activates at least one group of TCI states based on the MAC CE, where each group of TCI states is TCI states mapped by one codepoint. When the network device subsequently indicates a TCI state to the terminal device based on DCI, a value of a TCI field in the DCI is a value of a specific codepoint. The terminal device may determine, based on the value of the TCI field, a specific TRP whose TCI state is indicated or updated by the network device. In this way, an updated TCI state of a TRP corresponding to each codepoint is flexible and variable. Flexibility of indicating, by the network device, the TCI state to the terminal device is improved.

Based on the fifteenth aspect or the sixteenth aspect, in a possible implementation, if a value of the first field is 0 and a value of the second field is 1, the TCI state of the second TRP is updated corresponding to a codepoint corresponding to the field group;
if a value of the first field is 1 and a value of the second field is 0, the TCI state of the first TRP is updated corresponding to a codepoint corresponding to the field group; or
if a value of the first field is 1 and a value of the second field is 1, the TCI state of the first TRP and the TCI state of the second TRP are updated corresponding to a codepoint corresponding to the field group.

A seventeenth aspect of this application provides a communication apparatus, including:
a transceiver module, configured to receive configuration information from a network device, where the configuration information includes a correspondence between at least one control resource set of the communication apparatus and a TCI mode, and the TCI mode includes a joint mode or a separate mode; and
a processing module, configured to determine, based on the configuration information, the TCI mode corresponding to the at least one control resource set.

An eighteenth aspect of this application provides a communication apparatus, including:
a processing module, configured to determine configuration information, where the configuration information includes a correspondence between at least one control resource set of a terminal device and a TCI mode, and the TCI mode includes a joint mode or a separate mode; and
a transceiver module, configured to send the configuration information to the terminal device.

Based on the seventeenth aspect or the eighteenth aspect, in a possible implementation, the at least one control resource set belongs to at least one control resource set pool, and the configuration information includes a correspondence between an index of the at least one control resource set pool and the TCI mode.

Based on the seventeenth aspect or the eighteenth aspect, in a possible implementation, each of the at least one control resource set corresponds to one TCI mode.

Based on the seventeenth aspect or the eighteenth aspect, in a possible implementation, each of the at least one control resource set corresponds to one TRP.

A nineteenth aspect of this application provides a communication apparatus, including:
a transceiver module, configured to receive configuration information from a network device, where the configuration information includes information about control resource sets that are of the communication apparatus and that are associated with M TCI state lists, the M TCI state lists include a UL TCI state list and/or a joint/DL TCI state list, and M is an integer greater than or equal to 1; and
a processing module, configured to determine, based on the configuration information, TCI modes corresponding to the control resource sets associated with the M TCI state lists, where the TCI mode includes a joint mode or a separate mode.

A twentieth aspect of this application provides a communication apparatus, including:
a processing module, configured to determine configuration information, where the configuration information includes information about control resource sets that are of a terminal device and that are associated with M TCI state lists, the M TCI state lists include a UL TCI state list and/or a joint/DL TCI state list, and M is an integer greater than or equal to 1; and
a transceiver module, configured to send the configuration information to the terminal device.

Based on the nineteenth aspect or the twentieth aspect, in a possible implementation, the control resource sets associated with the M TCI state lists belong to one or more control resource set pools, and the configuration information includes an index of the one or more control resource set pools.

Based on the nineteenth aspect or the twentieth aspect, in a possible implementation, the control resource sets associated with the M TCI state lists include a first control resource set.

If a TCI mode associated with the first control resource set is a separate mode, the first control resource set is associated with one UL TCI state list and one joint/DL TCI state list in the M TCI state lists; or
if a TCI mode associated with the first control resource set is a joint mode, the first control resource set is associated with one joint/DL TCI state list in the M TCI state lists.

Based on the nineteenth aspect, in a possible implementation, the processing module is further configured to:
determine that a second control resource set is associated with a first TCI mode, where the first TCI mode is a TCI mode configured for a cell in which the communication apparatus is located, and the second control resource set is a control resource set of the communication apparatus other than the control resource sets associated with the M TCI state lists; or
if the second control resource set is a control resource set of the communication apparatus other than the control resource sets associated with the M TCI state lists, determine that a TCI mode corresponding to the second control resource set is a TCI mode configured for a cell in which the communication apparatus is located.

Based on the nineteenth aspect or the twentieth aspect, in a possible implementation, each of the control resource sets associated with the M TCI state lists corresponds to one TRP.

A twenty-first aspect of this application provides a communication apparatus, including:
a transceiver module, configured to receive first information from a network device, where the first information indicates a TCI mode associated with at least one first TCI state, and the at least one first TCI state is activated by the network device for the communication apparatus; and
a processing module, configured to determine, based on the first information, the TCI mode associated with the at least one first TCI state.

Based on the fifth aspect, in a possible implementation, the transceiver module is further configured to:
receive second information from the network device, where the second information indicates a TCI mode associated with at least one second TCI state, and the at least one second TCI state is activated or indicated by the network device for the communication apparatus.

The processing module is further configured to determine, based on the second information, the TCI mode associated with the at least one second TCI state.

A twenty-second aspect of this application provides a communication apparatus, including:
a processing module, configured to determine first information, where the first information indicates a TCI mode associated with at least one first TCI state, and the at least one first TCI state is activated by the communication apparatus for a terminal device; and
a transceiver module, configured to send the first information to the terminal device.

Based on the twenty-second aspect, in a possible implementation, the transceiver module is further configured to:
send second information to the terminal device, where the second information indicates a TCI mode associated with at least one second TCI state, and the at least one second TCI state is activated by the communication apparatus for the terminal device.

Based on the twenty-first aspect, in a possible implementation, the at least one first TCI state and the at least one second TCI state are activated by the network device for the communication apparatus by using a same MAC CE or same DCI.

Based on the twenty-first aspect, in a possible implementation, the at least one first TCI state and the at least one second TCI state form at least one group of TCI states.

A quantity of TCI states included in each group of TCI states in the at least one group of TCI states is determined based on the TCI mode associated with the at least one first TCI state and the TCI mode associated with the at least one first TCI state.

Based on the twenty-first aspect or the twenty-second aspect, in a possible implementation, a quantity of first TCI states included in each group of TCI states in the at least one group of TCI states is determined based on the TCI mode associated with the at least one first TCI state; and
a quantity of second TCI states included in each group of TCI states in the at least one group of TCI states is determined based on the TCI mode associated with the at least one first TCI state.

Based on the twenty-first aspect or the twenty-second aspect, in a possible implementation, if the at least one first TCI state is associated with a joint mode and the at least one second TCI state is associated with a separate mode, each group of TCI states in the at least one group of TCI states includes one first TCI state and one or two second TCI states;
if the at least one first TCI state is associated with a separate mode and the at least one second TCI state is associated with a joint mode, each group of TCI states in the at least one group of TCI states includes one or two first TCI states and one first TCI state;
if the at least one first TCI state and the at least one second TCI state are both associated with a joint mode, each group of TCI states in the at least one group of TCI states includes one first TCI state and one second TCI state; or
if the at least one first TCI state and the at least one second TCI state are both associated with a separate mode, each group of TCI states in the at least one group of TCI states includes one or two first TCI states and one or two second TCI states.

Based on the twenty-first aspect, in a possible implementation, the at least one first TCI state is the TCI state corresponding to the first TRP, and the first TRP is for performing communication transmission with the communication apparatus.

Based on the twenty-second aspect, in a possible implementation, the at least one first TCI state is the TCI state corresponding to the first TRP, and the first TRP is for performing communication transmission with the terminal device.

Based on the twenty-first aspect, in a possible implementation, the at least one second TCI state is the TCI state corresponding to the second TRP, and the second TRP is for performing communication transmission with the communication apparatus.

Based on the twenty-second aspect, in a possible implementation, the at least one second TCI state is the TCI state corresponding to the second TRP, and the second TRP is for performing communication transmission with the terminal device.

A twenty-third aspect of this application provides a communication apparatus, including:
a transceiver module, configured to receive a MAC CE from a network device, where the MAC CE includes a first field and a second field, the first field indicates an index of a control resource set pool to which a first control resource set of the communication apparatus belongs, and the second field indicates a TCI mode associated with the first control resource set; and
a processing module, configured to determine, based on the MAC CE, the TCI mode associated with the first control resource set.

A twenty-fourth aspect of this application provides a communication apparatus, including:
a processing module, configured to determine a MAC CE, where the MAC CE includes a first field and a second field, the first field indicates an index of a control resource set pool to which a first control resource set of a terminal device belongs, and the second field indicates a TCI mode associated with the first control resource set; and
a transceiver module, configured to send the MAC CE to the terminal device.

Based on the twenty-third aspect or the twenty-fourth aspect, in a possible implementation, the first control resource set corresponds to one TRP.

A twenty-fifth aspect of this application provides a communication apparatus, including:
a transceiver module, configured to receive a MAC CE from a network device, where the MAC CE includes a first field, the first field indicates a TCI mode associated with a first TCI state in each of N groups of TCI states, the N groups of TCI states are TCI states activated by the network device for the communication apparatus, and N is an integer greater than or equal to 1; and
a processing module, configured to determine, based on the MAC CE, the TCI mode associated with the first TCI state in each of the N groups of TCI states.

A twenty-sixth aspect of this application provides a communication apparatus, including:
a processing module, configured to determine a MAC CE, where the MAC CE includes a first field, the first field indicates a TCI mode associated with a first TCI state in each of N groups of TCI states, and the N groups of TCI states are activated by the communication apparatus for a terminal device; and
a transceiver module, configured to send the MAC CE to the terminal device.

Based on the twenty-fifth aspect or the twenty-sixth aspect, in a possible implementation, the MAC CE further includes a second field, and the second field indicates a TCI mode associated with a second TCI state in each of the N groups of TCI states.

Based on the twenty-fifth aspect or the twenty-sixth aspect, in a possible implementation, the first TCI state in each group of TCI states is the TCI state corresponding to the first TRP, and the second TCI state in each group of TCI states is the TCI state corresponding to the second TRP.

A twenty-seventh aspect of this application provides a communication apparatus, including:
a transceiver module, configured to receive indication information from a network device, where the indication information indicates a TCI state identifier; and
a processing module, configured to: determine a TCI state list to which the TCI state identifier belongs, where the TCI state list is associated with a first control resource set of the communication apparatus; and determine that the TCI state identifier is a TCI state identifier corresponding to the first control resource set.

Based on the twenty-seventh aspect, in a possible implementation, the transceiver module is further configured to:
receive first configuration information from the network device, where the first configuration information includes a plurality of TCI state lists configured by the network device for the communication apparatus, the plurality of TCI state lists include P UL TCI state lists and Q DL/joint TCI state lists, TCI state identifiers in different UL TCI state lists in the P UL TCI state lists are different, and TCI state identifiers in different DL/joint TCI state lists in the Q DL/joint TCI state lists are different, where P is an integer greater than or equal to 2, and Q is an integer greater than or equal to 2.

Based on the twenty-seventh aspect, in a possible implementation, each of the P UL TCI state lists is associated with one control resource set of the terminal device, different UL TCI state lists are associated with different control resource sets, each of the Q DL/joint TCI state lists is associated with one control resource set of the communication apparatus, and different DL/joint TCI state lists are associated with different control resource sets.

Based on the twenty-seventh aspect, in a possible implementation, in the P UL TCI state lists, a UL TCI state list whose index is 0 is associated with the first control resource set of the communication apparatus, and a UL TCI state list whose index is 1 is associated with a second control resource set of the communication apparatus; and in the Q DL/joint TCI state lists, a DL/joint TCI state list whose index is 0 corresponds to the first control resource set, and a DL/joint TCI state list whose index is 1 corresponds to the second control resource set. In this implementation, the communication apparatus may determine, according to a default rule, a control resource set associated with each TCI state list. No signaling indication is required, thereby avoiding signaling overheads.

Based on the twenty-seventh aspect, in a possible implementation, the transceiver module is further configured to:
receive second configuration information from the network device, where the second configuration information includes an association relationship between the plurality of TCI state lists and control resource sets of the communication apparatus.

A twenty-eighth aspect of this application provides a communication apparatus, including:
a processing module, configured to determine first configuration information, where the first configuration information includes a plurality of TCI state lists configured by the communication apparatus for a terminal device, the plurality of TCI state lists include P UL TCI state lists and Q DL/joint TCI state lists, TCI state identifiers in different UL TCI state lists in the P UL TCI state lists are different, and TCI state identifiers in different DL/joint TCI state lists in the Q DL/joint TCI state lists are different, where P is an integer greater than or equal to 2, and Q is an integer greater than or equal to 2; and
a transceiver module, configured to send the first configuration information to the terminal device.

Based on the twenty-eighth aspect, in a possible implementation, each of the P UL TCI state lists is associated with one control resource set of the terminal device, different UL TCI state lists are associated with different control resource sets, each of the Q DL/joint TCI state lists is associated with one control resource set of the terminal device, and different DL/joint TCI state lists are associated with different control resource sets.

Based on the twenty-eighth aspect, in a possible implementation, in the P UL TCI state lists, a UL TCI state list whose index is 0 is associated with the first control resource set of the terminal device, and a UL TCI state list whose index is 1 is associated with a second control resource set of the terminal device; and in the Q DL/joint TCI state lists, a DL/joint TCI state list whose index is 0 corresponds to the first control resource set, and a DL/joint TCI state list whose index is 1 corresponds to the second control resource set.

Based on the twenty-eighth aspect, in a possible implementation, the transceiver module is further configured to:
send second configuration information to the terminal device, where the second configuration information includes an association relationship between the plurality of TCI state lists and control resource sets of the terminal device.

A twenty-ninth aspect of this application provides a communication apparatus, including:
a transceiver module, configured to receive a MAC CE from a network device, where the MAC CE includes a first field and a second field, the first field and the second field jointly indicate a TCI state, a length of the first field is A bits, a length of the second field is B bits, A plus B is greater than or equal to 8, and both A and B are integers greater than or equal to 1; and
a processing module, configured to determine the TCI state based on the MAC CE.

A thirtieth aspect of this application provides a communication apparatus, including:
a processing module, configured to determine a MAC CE, where the MAC CE includes a first field and a second field, the second field and the second field jointly indicate a TCI state, a length of the first field is A bits, a length of the second field is B bits, A plus B is greater than or equal to 8, and both A and B are integers greater than or equal to 1; and
a transceiver module, configured to send the MAC CE to the terminal device.

Based on the twenty-ninth aspect or the thirtieth aspect, in a possible implementation, the first field M is 1 bit, the second field M is 7 bits. The first field is a most significant bit in bits indicating the TCI state, and the second field is a bit other than the most significant bit in the bits indicating the TCI state. Alternatively, the first field is a least significant bit in bits indicating the TCI state, and the second field is a bit other than the least significant bit in the bits indicating the TCI state.

Based on the twenty-ninth aspect or the thirtieth aspect, in a possible implementation, the first field and the second field are discontinuous.

A thirty-first aspect of this application provides a communication apparatus, including:
a transceiver module, configured to receive a MAC CE from a network device, where the MAC CE includes one or more field groups, each field group corresponds to one codepoint, the codepoint is mapped to a plurality of TCI states, each field group includes a first field and a second field, the first field indicates whether the network device uses a TCI state of a first TRP included in the plurality of TCI states as an updated TCI state of the first TRP, the second field in each field group indicates whether the network device uses, as an updated TCI state of a second TRP, a TCI state of the second TRP included in the TCI states mapped by the codepoint corresponding to the field group; and
a processing module, configured to determine, based on the MAC CE, an updated TCI state of a specific TRP corresponding to a codepoint corresponding to the one or more field groups.

A thirty-second aspect of this application provides a communication apparatus, including:
a processing module, configured to determine a MAC CE, where the MAC CE includes one or more field groups, each field group corresponds to one codepoint, the codepoint is mapped to a plurality of TCI states, each field group includes a first field and a second field, the first field indicates whether the communication apparatus uses a TCI state of a first TRP included in the plurality of TCI states as an updated TCI state of the first TRP, the second field in each field group indicates whether the communication apparatus uses, as an updated TCI state of a second TRP, a TCI state of the second TRP included in the TCI states mapped by the codepoint corresponding to the field group; and
a transceiver module, configured to send the MAC CE to a terminal device.

Based on the thirty-first aspect or the thirty-second aspect, in a possible implementation, if a value of the first field is 0 and a value of the second field is 1, the TCI state of the second TRP is updated corresponding to a codepoint corresponding to the field group;
if a value of the first field is 1 and a value of the second field is 0, the TCI state of the first TRP is updated corresponding to a codepoint corresponding to the field group; or
if a value of the first field is 1 and a value of the second field is 1, the TCI state of the first TRP and the TCI state of the second TRP are updated corresponding to a codepoint corresponding to the field group.

A thirty-third aspect of this application provides a communication apparatus. The communication apparatus includes a processor. The processor is configured to invoke a computer program or computer instructions in a memory, so that the processor implements any implementation of any one of the first aspect to the sixteenth aspect.

Optionally, the communication apparatus further includes a transceiver, and the processor is configured to control the transceiver to receive and send a signal.

A thirty-fourth aspect of this application provides a communication apparatus. The communication apparatus includes a processor, and the processor is configured to perform any implementation of any one of the first aspect to the sixteenth aspect.

A thirty-fifth aspect of this application provides a computer program product including instructions. When the computer program product runs on a computer, the computer is enabled to perform any implementation of any one of the first aspect to the sixteenth aspect.

A thirty-sixth aspect of this application provides a computer-readable storage medium, including computer instructions. When the instructions are run on a computer, the computer is enabled to perform any implementation of any one of the first aspect to the sixteenth aspect.

A thirty-seventh aspect of this application provides a chip apparatus, including a processor, configured to invoke a computer program or computer instructions in a memory, so that the processor performs any implementation of any one of the first aspect to the sixteenth aspect.

Optionally, the processor is coupled to the memory through an interface.

A thirty-eighth aspect of this application provides a communication system. The communication system includes the communication apparatus according to the seventeenth aspect and the communication apparatus according to the eighteenth aspect; the communication system includes the communication apparatus according to the nineteenth aspect and the communication apparatus according to the twentieth aspect; the communication system includes the communication apparatus according to the twenty-first aspect and the communication apparatus according to the twenty-second aspect; the communication system includes the communication apparatus according to the twenty-third aspect and the communication apparatus according to the twenty-fourth aspect; the communication system includes the communication apparatus according to the twenty-fifth aspect and the communication apparatus according to the twenty-sixth aspect; the communication system includes the communication apparatus according to the twenty-seventh aspect and the communication apparatus according to the twenty-eighth aspect; the communication system includes the communication apparatus according to the twenty-ninth aspect and the communication apparatus according to the thirtieth aspect; or the communication system includes the communication apparatus according to the thirty-first aspect and the communication apparatus according to the thirty-second aspect.

According to the foregoing technical solutions, it can be learned that embodiments of this application have the following advantages:
It can be learned from the foregoing technical solutions that the terminal device receives the configuration information from the network device, where the configuration information includes the correspondence between the at least one control resource set of the terminal device and the TCI mode; and the terminal device determines, based on the configuration information, the TCI mode corresponding to the at least one control resource set. Because each of the at least one control resource set corresponds to one TRP, different control resource sets correspond to different TRPs. The TRP corresponding to the at least one control resource set is a TRP that provides a service for the terminal device. Therefore, the network device may configure a corresponding TCI mode for each TRP based on the configuration information, and configure a TCI mode for the terminal device at a TRP level (or a control resource set level). This helps the network device configure an appropriate TCI mode for each TRP, and helps the network device more flexibly configure or indicate a beam for the terminal device, thereby improving communication transmission performance.

### BRIEF DESCRIPTION OF DRAWINGS

FIG. 1 is a diagram of a communication system according to an embodiment of this application;
FIG. 2 is another diagram of a communication system according to an embodiment of this application;
FIG. 3 is a diagram of a scenario to which a method is applicable according to an embodiment of this application;
FIG. 4 is a diagram of a scenario to which a method is applicable according to an embodiment of this application;
FIG. 5 is a diagram of indicating a common beam by a network device to a terminal device according to an embodiment of this application;
FIG. 6 is a diagram of a signaling format of a MAC CE according to an embodiment of this application;
FIG. 7 is a diagram of another signaling format of a MAC CE according to an embodiment of this application;
FIG. 8 is a diagram of another signaling format of a MAC CE according to an embodiment of this application;
FIG. 9 is a diagram of an embodiment of a TCI mode configuration method according to an embodiment of this application;
FIG. 10 is a diagram of another embodiment of a TCI mode configuration method according to an embodiment of this application;
FIG. 11 is a diagram of another embodiment of a TCI mode configuration method according to an embodiment of this application;
FIG. 12 is a diagram of another embodiment of a TCI mode configuration method according to an embodiment of this application;
FIG. 13 is a diagram of another embodiment of a TCI mode configuration method according to an embodiment of this application;
FIG. 14 is a diagram of an embodiment of a TCI state indication method according to an embodiment of this application;
FIG. 15 is a diagram of another embodiment of a TCI state indication method according to an embodiment of this application;
FIG. 16 is a diagram of another signaling format of a MAC CE according to an embodiment of this application;
FIG. 17 is a diagram of another embodiment of a TCI state indication method according to an embodiment of this application;
FIG. 18 is a diagram of another signaling format of a MAC CE according to an embodiment of this application;
FIG. 19 is a diagram of a structure of a communication apparatus according to an embodiment of this application;
FIG. 20 is a diagram of another structure of a communication apparatus according to an embodiment of this application;
FIG. 21 is a diagram of another structure of a communication apparatus according to an embodiment of this application;
FIG. 22 is a diagram of a structure of a terminal device according to an embodiment of this application; and
FIG. 23 is a diagram of a structure of a network device according to an embodiment of this application.

### DESCRIPTION OF EMBODIMENTS

This application provides a TCI mode configuration method, a TCI state indication method, and an apparatus, so that a network device configures, for a terminal device, a TCI mode associated with a control resource set, to configure a TCI mode for the terminal device at a control resource set level. This helps the network device more flexibly configure or indicate a beam for the terminal device, thereby improving communication transmission performance.

The following describes technical solutions of this application with reference to accompanying drawings.

The technical solutions in this application may be applied to various communication systems, for example, a 5G system, a new radio (new radio, NR) system, a long-term evolution (long-term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system (for example, a 6G mobile communication system) after the 5G network, and a vehicle-to-everything (vehicle-to-everything, V2X) communication system.

The communication system to which this application is applicable includes a network device and a terminal device. The network device and the terminal device may perform communication transmission by using a beam.

The following describes the terminal device and the network device in this application.

The terminal device may be a wireless terminal device that can receive scheduling and indication information of a network device. The terminal device may be a device that provides a user with voice and/or data connectivity, a handheld device having a wireless connection function, or another processing device connected to a wireless modem.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity to a user), for example, a handheld device or a vehicle-mounted device having a wireless connection function. Currently, some examples of the terminal device are: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in the internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the internet of vehicles may be a vehicle-mounted device, an entire vehicle device, a vehicle-mounted module, a vehicle, or the like. The wireless terminal in industrial control may be a camera, a robot, or the like. The wireless terminal in the smart home may be a television, an air conditioner, a sweeper, a speaker, a set-top box, or the like.

The network device may be a device in a wireless network. For example, the network device may be a device that is deployed in a radio access network and that provides a wireless communication function for the terminal device. For example, the network device may be a radio access network (radio access network, RAN) node that connects a terminal device to a wireless network, and may also be referred to as an access network device.

The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or an access point (access point, AP), a wireless relay node, a wireless backhaul node, a transmission point (transmission point, TP), or a TRP in a wireless fidelity (wireless fidelity, Wi-Fi) system. Alternatively, the network device may be a network device in a 5G mobile communication system, for example, a next generation NodeB (next generation NodeB, gNB), a transmission reception point (transmission reception point, TRP) or a TP in an NR system, or one antenna panel or one group of antenna panels (including a plurality of antenna panels) of a base station in a 5G mobile communication system. Alternatively, the network device may be a network node that forms a gNB or a transmission point, for example, a BBU, a distributed unit (distributed unit, DU), or the like.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and performing functions of a radio link control (radio link control, RLC) layer, a MAC layer, and a physical (physical, PHY) layer. The AAU implements some physical layer processing functions, radio frequency processing, and a function related to an active antenna. The information at the RRC layer is finally changed to the information at the PHY layer, or is changed from the information at the PHY layer. Therefore, in this architecture, higher layer signaling (for example, RRC layer signaling) may also be considered to be sent by the DU, or sent by the DU and the AAU. It may be understood that the network device may be a device including one or more of a CU node, a DU node, and an AAU node. In addition, the CU may be classified as a network device in the RAN, or a network device in a core network (core network, CN). This is not limited in this application.

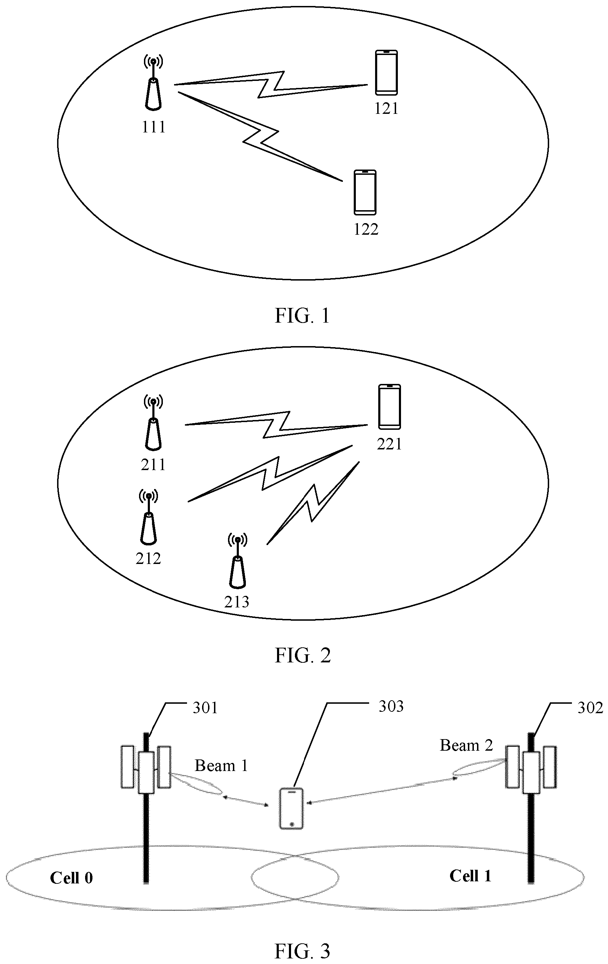

For ease of understanding the technical solutions in embodiments of this application, the following shows, with reference to FIG. 1 and FIG. 2, two possible communication systems to which the method provided in embodiments of this application is applicable.

FIG. 1 is a diagram of a communication system according to an embodiment of this application. As shown in FIG. 1, the communication system includes at least one network device, for example, a network device 111 shown in FIG. 1. The communication system further includes at least one terminal device, for example, a terminal device 121 and a terminal device 122 shown in FIG. 1. The network device 111 may perform transmission with the terminal device 121 and the terminal device 122 by using beams.

FIG. 2 is another diagram of a communication system according to an embodiment of this application. As shown in FIG. 2, the communication system may include at least two network devices, for example, a network device 211, a network device 212, and a network device 213 shown in FIG. 2. The communication system further includes at least one terminal device, for example, a terminal device 221 shown in FIG. 2. The terminal device 221 may be provided with communication services by a plurality of network devices. For example, as shown in FIG. 2, the network device 211 may perform transmission with the terminal device 221 by using a beam 1, the network device 212 may perform transmission with the terminal device 221 by using a beam 2, and the network device 213 may perform transmission with the terminal device 221 by using a beam 3. In other words, a plurality of network devices may provide a communication service for one terminal device.

The following describes two possible scenarios to which this application is applicable. This application is also applicable to other scenarios, and a scenario in the following example does not constitute a limitation on this application.

FIG. 3 is a diagram of a scenario to which a configuration method is applicable according to an embodiment of this application. Refer to FIG. 3. The communication system includes a TRP 301, a TRP 302, and a terminal device 303. A cell 0 is a serving cell of the terminal device 303, and a cell 1 is a non-serving cell of the terminal device. The terminal device measures a beam signal of the cell 1 (non-serving cell), and reports a measurement result to the cell 0. The terminal device 303 may switch from a beam 1 to a beam 2 based on a network side configuration, but the terminal device 303 does not switch the serving cell. The terminal device 303 may receive downlink information from the TRP 302 by using the beam 2. It may be understood that the terminal device 303 receives a downlink signal from an antenna of the non-serving cell, but the serving cell of the terminal device 303 remains unchanged. For the terminal device 303, the serving cell is not switched, and only a beam for receiving a signal is from the cell 1. A configuration (for example, a time-frequency resource) for receiving a signal by the terminal device does not change. The scenario shown in FIG. 3 may be referred to as an inter-cell multi-TRP transmission scenario of a terminal device.

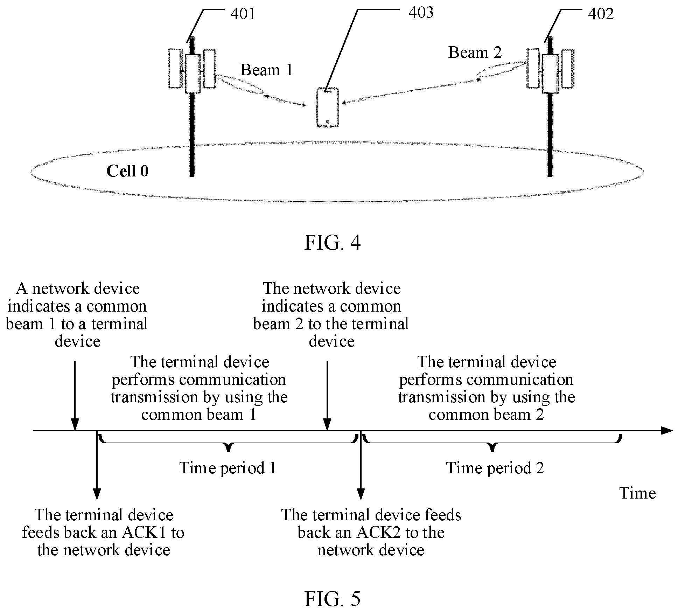

FIG. 4 is a diagram of another scenario to which a configuration method is applicable according to an embodiment of this application. Refer to FIG. 4. The communication system includes a TRP 401, a TRP 402, and a terminal device 403. A cell 0 is a serving cell of the terminal device 403. A beam 1 is a serving beam of the terminal device 403, and a beam 2 is a non-serving beam of the terminal device 403. The terminal device 43 may measure a reference signal sent by the TRP 402 by using the beam 2, and report a measurement result to the TRP 1. The terminal device 403 may switch from the beam 1 to the beam 2 based on a network side configuration. The terminal device 403 may receive downlink information from the TRP 402 by using the beam 2. The scenario shown in FIG. 4 may be referred to as an intra-cell multi-TRP transmission scenario of a terminal device.

It should be noted that when a TRP provides a service for a terminal device, the network device in this application may be understood as the TRP, or a logical device including the TRP. When a plurality of TRPs provide services for a terminal device, the network device in this application may be understood as one of the plurality of TRPs, or a logical device including the plurality of TRPs. This is not specifically limited in this application. The method provided in this application may be performed between the network device and the terminal device. A form of the network device is not described below.

To facilitate understanding of the technical solutions in this application, the following describes some technical terms used in this application.
1. Beam (beam): The beam is a communication resource. The beam may be a wide beam, a narrow beam, or a beam of another type, and a technology for forming a beam may be a beamforming technology or another technical means. The beamforming technology may be specifically a digital beamforming technology, an analog beamforming technology, and a hybrid digital/analog beamforming technology. Different beams may be considered as different resources.

In the NR protocol, the beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by using a TCI-state parameter, or may be indicated by using a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (including an uplink TCI-state and a downlink TCI-state), a spatial relation, or the like. The foregoing terms are also equivalent to each other. Alternatively, the beam may be replaced with another term for representing a beam. This is not limited in this application.

A transmitting end may send same information or different information by using different beams. Optionally, a plurality of beams having a same or similar communication feature may be considered as one beam. One beam may include one or more antenna ports, configured to transmit a data channel, a control channel, a sounding signal, and the like.

A beam for sending a signal may be referred to as a transmission beam (transmission beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). An uplink transmission beam may be indicated by using any one of the spatial relation, the TCI-state, and a sounding reference signal (sounding reference signal, SRS) resource (indicating a transmission beam using the SRS). Therefore, the uplink transmission beam may alternatively be replaced with the SRS resource.

A beam for receiving a signal may be referred to as a reception beam (reception beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting).

For example, a transmission beam may refer to signal strength distribution formed in different directions in space after a signal is transmitted through an antenna, and a reception beam may refer to signal strength distribution in different directions in space of a radio signal received from an antenna. It may be understood that one or more antenna ports forming one beam may also be considered as one antenna port set.

When a low frequency band or an intermediate frequency band is used, a transmitting end may send signals in an omnidirectional manner or at a wide angle. When a high frequency band is used, because of a small carrier wavelength of a high frequency communication system, an antenna array formed by many antenna elements may be disposed at a transmitting end and a receiving end. The transmitting end sends a signal by using a specific beamforming weight, so that the sent signal forms a spatially directional beam, and the receiving end receives the signal by using the antenna array based on a specific beamforming weight. This helps improve received power of a signal at the receiving end and resist a path loss.

2. Quasi-co-location (quasi-co-location, QCL): A quasi-co-location relationship indicates that a plurality of resources have one or more same or similar communication features. Same or similar communication configurations may be used for a plurality of resources having a quasi-co-location relationship. For example, if two antenna ports have a quasi-co-location relationship, a large-scale channel characteristic of transmitting one symbol by one port may be deduced from a large-scale channel characteristic of transmitting one symbol by the other port. The large-scale property may include delay spread, an average delay, Doppler spread, Doppler frequency shift, an average gain, a reception parameter, a reception beam number of the terminal device, transmission/reception channel correlation, an angle of arrival, spatial correlation of a receiver antenna, a dominant angle of arrival (angle-of-arrival, AoA), an average angle of arrival, AoA spread, and the like. Specifically, a co-location indication indicates whether at least two groups of antenna ports have a co-location relationship, including: The co-location indication indicates whether channel state information-reference signals sent by the at least two groups of antenna ports are from a same transmission point, or the co-location indication indicates whether channel state information-reference signals sent by the at least two groups of antenna ports are from a same beam group.

3. TCI: The TCI also referred to as a TCI state (TCI-State). As specified in a communication protocol, QCL is configured by using a TCI state. A parameter of the TCI state is for configuring a quasi-co-location relationship between one or two downlink reference signals and a demodulation reference signal (demodulation reference signal, DMRS) of a physical downlink shared channel (physical downlink shared channel, PDSCH). The DCI may include a TCI field, and the TCI field is a field that is in the DCI and that indicates PDSCH antenna port quasi-co-location.

The TCI is configured by a network device for a terminal device by using an RRC message, and is referred to as a TCI state in configuration signaling. After the network device configures TCI states for the terminal device by using the RRC message, the network device may send a MAC CE to the terminal device. The MAC is for activating one or more TCI states in the TCI states configured by the network device for the terminal device. Optionally, the network device may further send DCI to the terminal device. The DCI indicates a TCI state in the TCI states activated by the MAC CE.

The TCI state includes one or two QCL relationships. The QCL relationship represents a specific consistency relationship between a signal/channel to be received currently and a previously known reference signal. If there is a QCL relationship, the terminal device may receive or send an upcoming signal/channel by inheriting a receiving or sending parameter used for previously receiving or sending a reference signal. Each TCI state corresponds to one beam. The terminal device may perform communication transmission by using the beam.

The following describes the configuration, activation, and indication of the TCI state.

TCI state configuration: The network device configures a plurality of TCI states for the terminal device by using RRC signaling. Each of these TCI states includes quasi-co-location information (QCL-Info) whose type is a type D (type D). Alternatively, the network device may configure a TCI-state that does not include the QCL-info whose type is the type D. However, the TCI-states do not indicate a data transmission beam. Therefore, details are not further described herein.

TCI state activation: After configuring the plurality of TCI states, the network device further needs to activate eight TCI states in the TCI states by using the MAC CE. The eight TCI states are in one-to-one correspondence with eight values of the TCI field in the DCI. In other words, the eight TCI states corresponding to the eight values of the TCI field in the DCI are determined based on the MAC CE.

TCI-state indication: The network device indicates a specific TCI-state by using the TCI field in the DCI. For example, a value of the TCI field in the DCI sent by the network device to the terminal device is 000, indicating that a TCI-state corresponding to 000 is used for the data transmission beam. A reference signal included in the QCL-Info whose type is the type D in the TCI state is a channel state information-reference signal (channel state information-reference signal, CSI-RS) whose index is #1, indicating that a beam used for data transmission is the same as a reception beam corresponding to the CSI-RS whose index is #1. The reception beam corresponding to the CSI-RS whose index is #1 may be determined through a beam measurement procedure, and is known to the terminal device. Therefore, the terminal device may determine, based on a specific value of the TCI field, a beam corresponding to the data transmission beam, to send or receive data using the corresponding reception beam.

It should be noted that the two descriptions, namely, the TCI-state and the TCI state, in this specification may be interchanged.

4. Common beam: Currently, each channel is indicated by using an independent beam. Each channel has its own corresponding beam. In this application, a common beam is defined, and is used for a plurality of uplink and/or downlink channels.

The common beam is a same beam used for a plurality of channels, a plurality of types of channels, a plurality of reference signals, and/or a plurality of types of reference signals. The channel includes but is not limited to at least one of the following: a physical downlink control channel (physical downlink control channel, PDCCH), a PDSCH, a physical uplink control channel (physical uplink control channel, PUCCH), a physical uplink shared channel (physical uplink shared channel, PUSCH), or a physical random access channel (physical random access channel, PRACH). The reference signal includes but is not limited to at least one of an SSB, a CSI-RS, a DMRS, a phase tracking reference signal (phase tracking reference signal, PTRS), a time-frequency tracking reference signal (tracking reference signal, TRS), an SRS, or the like.

A joint (joint) common beam is for transmission of at least one uplink/downlink channel or at least one uplink/downlink reference signal, for example, a PDCCH, a PDSCH, a PUCCH, and a PUSCH. The joint common beam may also be referred to as an uplink and downlink common beam.

An uplink common beam is for transmission of a plurality of uplink channels, transmission of a plurality of types of uplink channels, and/or transmission of one or more uplink reference signals, for example, a PUCCH, a PUSCH, and an SRS.

A downlink common beam is for transmission of a plurality of downlink channels, transmission of a plurality of types of downlink channels, and/or transmission of one or more downlink reference signals, for example, a PDCCH, a PDSCH, and a CSI-RS.

Form of the common beam: The common beam may have a newly defined structure (different from an existing TCI-state). For example, the common beam includes beam indication related information, including but not limited to one or more of the following: a common beam identifier (identifier, ID), a logical cell identifier (cell ID), a physical cell identifier, a bandwidth part identifier, a reference signal resource for determining a beam, a QCL type, an uplink power control related parameter (such as a path loss measurement reference signal resource, p0, or a closed loop index (closedLoopIndex)), and an identifier of a path loss reference signal.

Application scope of the common beam: The common beam may be cell-specific, that is, one common beam is for transmission of a plurality of channels in one cell. The common beam may be bandwidth part (bandwidth path, BWP)-specific, and is for transmission of a plurality of beams in one BWP. The common beam may also be cross-cell, that is, is for transmission of a plurality of channels of a plurality of cells. The plurality of cells may be a plurality of cells in one frequency band (band). The plurality of cells may also be a plurality of inter-band cells.

5. TCI mode: The TCI mode includes a joint (joint) mode and a separate (separate) mode. The joint mode means that a same beam is used for both uplink transmission and downlink transmission between a TRP and a terminal device. The separate mode means that different beams are used for uplink transmission between a TRP and a terminal device and downlink transmission between the TRP and the terminal device.

6. A control resource set indicates a set of frequency domain resources for PDCCH transmission, is a parameter configuration unit for the PDCCH transmission, and includes a PDCCH related configuration parameter. Each control resource set belongs to a corresponding control resource set pool, and each control resource set pool corresponds to one index (CORESETPoolIndex). A configuration parameter of the control resource set includes an index of a control resource set pool to which the control resource set belongs. Usually, in a multiple downlink control information (multiple downlink control Information, MDCI) scenario or a non-coherent joint transmission (non-coherent joint transmission, NCJT) scenario, each control resource set corresponds to one TRP, and different control resource sets may correspond to different TRPs. In other words, a terminal device receives, by using a control resource set corresponding to a TRP, a PDCCH sent by the TRP.

A network device divides, by using an RRC message, resources used by the terminal device to receive a PDCCH into two groups, and each group of resources is referred to as a control resource set (CORESET). Each control resource set is associated with one control resource set pool index (CORESETpool Index). Each control resource set pool corresponds to one TCI state. Therefore, the TCI state corresponding to the control resource set pool may be determined by using the control resource set pool index.

For ease of description, this is briefly described below as: One control resource set belongs to one control resource set pool, and a control resource set may be specifically indicated by using a control resource set pool index.

The following describes a process in which a network device indicates a common beam to a terminal device.

FIG. 5 is a diagram of indicating a common beam by a network device to a terminal device according to an embodiment of this application. Refer to FIG. 5. The network device may indicate a common beam 1 to the terminal device based on DCI 1. After the terminal device receives the DCI 1, the terminal device may feed back an acknowledgment 1 (acknowledge, ACK1) to the network device. Then, the terminal device may perform communication transmission with the network device by using the common beam 1. The network device sends DCI 2 to the terminal device, where the DCI 2 indicates a common beam 2. In this case, after the terminal device receives the DCI 2, the terminal device may feed back an ACK2 to the network device. Then, the terminal device may perform communication transmission with the network device by using the common beam 2. The common beam 1 and the common beam 2 may be downlink common beams, uplink common beams, or uplink and downlink common beams.

In other words, the terminal device uses only one common beam of a same type. When the network device indicates a plurality of common beams of a same type, the terminal device uses only a recently indicated common beam of the same type. However, the terminal device may use a plurality of common beams of different types. For example, the terminal device performs uplink transmission by using one uplink common beam, and the terminal device performs downlink transmission by using one downlink common beam.

In release 17 (release 17, R17), a TCI state is classified into two types, which are specifically a joint/DL TCI state and a UL TCI state. The terminal device may be configured with both the joint/DL TCI state and the UL TCI state. A maximum of 128 joint/DL TCI states and a maximum of 64 UL TCI states can be configured.

The network device may configure, by using a serving cell configuration (serving cell config), a TCI mode for a serving cell in which the terminal device is located. In other words, the network device configures the TCI mode for the terminal device at a cell level. When a plurality of TRPs provide services for the terminal device, the terminal device performs communication transmission with all TRPs by using a same TCI mode. For the TCI mode, refer to related descriptions of the foregoing technical terms.

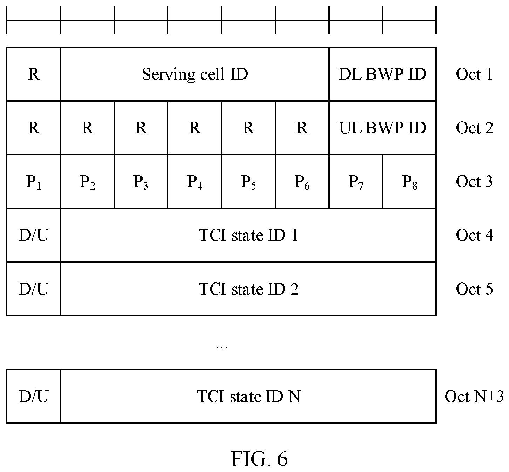

The network device may send a MAC CE to the terminal device. The MAC CE is for activating a TCI state. FIG. 6 is a diagram of a signaling format of a MAC CE according to an embodiment of this application. Refer to FIG. 6. The MAC CE includes an active TCI state identifier. The terminal device may determine, by determining a TCI mode configured by the network device for the terminal device, whether a joint/DL TCI state or a UL TCI state is activated by the MAC CE.

If the TCI mode configured for the terminal device is a joint mode, the terminal device may disregard a D/U field of the MAC CE. The terminal device may determine that the TCI state activated by the MAC CE is the joint/DL TCI state. The terminal device may use a beam corresponding to the joint/DL TCI state as a beam used by the terminal device to perform uplink and downlink transmission. The beam corresponding to the joint/DL TCI state may be understood as the uplink and downlink common beam described above.

If the TCI mode configured for the terminal device is a separate mode, the terminal device may determine, based on a value of the D/U field of the MAC CE, a type of at least one TCI state activated by the MAC CE. For example, as shown in FIG. 6, if a value of a D/U field in a row to which Oct 4 in the MAC CE belongs is 0, the terminal device may determine that last 7 bits in the row to which Oct 4 belongs indicate a UL TCI state. If a value of a D/U field in a row to which Oct 5 in the MAC CE belongs is 1, the terminal device may determine that the last 7 bits in the row to which Oct 5 belongs indicate a DL TCI state.

The terminal device uses a beam corresponding to the UL TCI state as a beam used by the terminal device to perform uplink transmission. The beam corresponding to the UL TCI state may be understood as the uplink common beam described above. The terminal device uses a beam corresponding to the DL TCI state as a beam used by the terminal device to perform downlink transmission. The beam corresponding to the DL TCI state may be understood as the downlink common beam described above.

The following describes an mTRP technology.

The mTRP technology is a transmission technology similar to long term evolution coordinate multi-point (long term evolution coordinate multi-point, LTE CoMP), that is, allows a network to transmit data for a user or provide services for a user by using a plurality of nodes. The plurality of nodes may be a plurality of antennas, a plurality of stations, or a plurality of transceiver units. This is not specifically limited in this application.

The following describes two possible implementations in which a network schedules a terminal device in an mTRP scenario.

Implementation 1: When there is no ideal backhaul between two nodes (namely, TRPs) that both provide services for one user (that is, an information exchange delay between the two nodes is large and cannot be disregarded), the two nodes cannot jointly provide services for a terminal device in a very close manner. In this case, the two nodes should independently schedule the terminal device. Because of the independent scheduling, the two nodes separately need to independently send DCI to the terminal device for scheduling. Therefore, resource allocation and beam indication of the two nodes are separately delivered by using two pieces of independent DCI.

In the implementation 1, the DCI sent by the node to the terminal device may be referred to as MDCI.

Implementation 2: When there is an ideal backhaul between two nodes (namely, TRPs) that both provide services for one user (that is, an information exchange delay between the two nodes can be disregarded), the two nodes can jointly provide services for a terminal device in a very close manner. In this case, one of the two nodes may implement unified scheduling or joint scheduling on the terminal device by using one piece of DCI.

In the implementation 2, the DCI sent by the node to the terminal device may be referred to as single downlink control Information (single downlink control Information, SDCI). The terminal device may determine, based on the DCI, a beam for receiving data from the two nodes.

It can be learned from this that, from a perspective of a scheduling mode, the mTRP scenario may be classified into an MDCI scenario and an SDCI scenario. The MDCI scenario corresponds to the scheduling mode shown in the foregoing implementation 1. The SDCI scenario corresponds to the scheduling mode shown in the foregoing implementation 2.

The following describes a diagram of a signaling format of a MAC CE in the MDCI scenario.

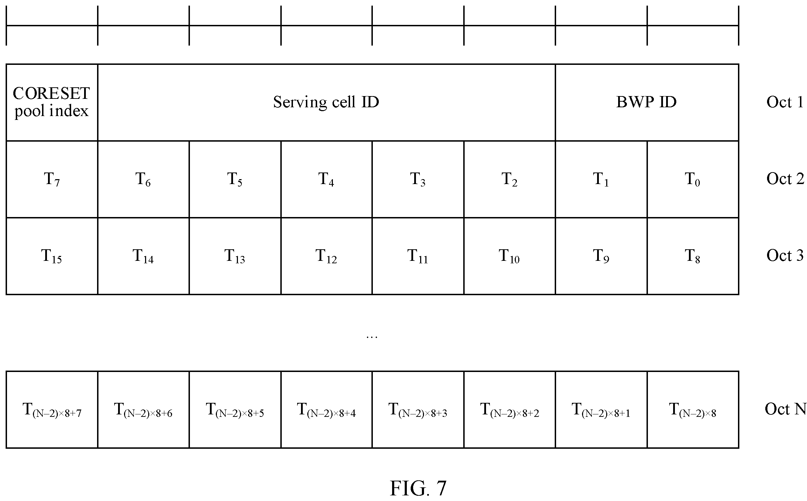

FIG. 7 is a diagram of a signaling format of a MAC CE according to an embodiment of this application. Refer to FIG. 7. The MAC CE includes a control resource set pool index (CORESETpool Index) field. The control resource set pool index field indicates a control resource set. The MAC CE is for activating a reception beam of a control channel associated with the control resource set. Therefore, when the terminal device subsequently receives a PDCCH sent by a TRP, the terminal device may determine, based on a control resource set corresponding to the TRP, a specific beam that needs to be used to receive the PDCCH.

It should be noted that when a plurality of control resource set pools are configured for the terminal device, if a value of a control resource set pool index field in a MAC CE received by the terminal device is "0", it indicates that the MAC CE is for activating a reception beam of a control channel of a CORESET pool 0.

Specifically, as shown in FIG. 7, the MAC CE is for activating one or more TCI states.

In the MDCI scenario, if a TCI mode of the terminal device is a joint mode, one TCI state (that is, a joint/DL TCI state) is mapped to one codepoint (codepoint). The codepoint may be represented by one or more bits. Specifically, a quantity of bits included in the one or more bits is related to a quantity of TCI states activated by the MAC CE. For example, if the MAC CE is for activating two TCI states, a codepoint corresponding to each TCI state may be represented by using 1 bit. For example, the MAC CE is for activating a TCI state 1 and a TCI state 2. TCI state 1 corresponds to a codepoint 1, and the codepoint 1 is "0". TCI state 2 represents a codepoint 2, and the codepoint 2 is "1". When the network device indicates a TCI state to the terminal device based on DCI, a value of a TCI field in the DCI is a codepoint corresponding to the TCI state. For example, if a value of the TCI field is 1, it indicates that the network device indicates the codepoint 1 to the terminal device. In this case, the terminal device may determine, based on a correspondence between a TCI state and a codepoint, that the network device indicates the TCI state 1.

In the MDCI scenario, if the TCI mode of the terminal device is a separate mode, two TCI states (a joint/DL TCI state and a UL TCI state) are mapped to one codepoint. The codepoint may be represented by one or more bits. Specifically, a quantity of bits included in the one or more bits is related to a quantity of TCI state pairs (including one joint/DL TCI state and one UL TCI state) activated by the MAC CE. For example, the MAC CE is for activating eight TCI state pairs, and each TCI state pair corresponds to one codepoint according to an activation sequence of the MAC CE. Specifically, a codepoint corresponding to each TCI state pair may be represented by using 3 bits. For example, the 1^{st} TCI state pair in the eight TCI state pairs corresponds to a codepoint 1, and the codepoint 1 is "000". The 2^{nd} TCI state pair corresponds to a codepoint 2, and the codepoint is "001". By analogy, the 8^{th} TCI state pair corresponds to a codepoint 8, and the codepoint is "111". In this case, the network device may subsequently indicate a TCI state pair to the terminal device based on DCI. A value of a TCI field in the DCI is a codepoint corresponding to the TCI state pair. For example, if the value of the TCI field is "000", it indicates that the network device indicates a TCI state pair 1 to the terminal device. In this case, the terminal device may determine, based on a correspondence between a TCI state pair and a codepoint, that the network device indicates a TCI state in the 1^{st} TCI state pair.

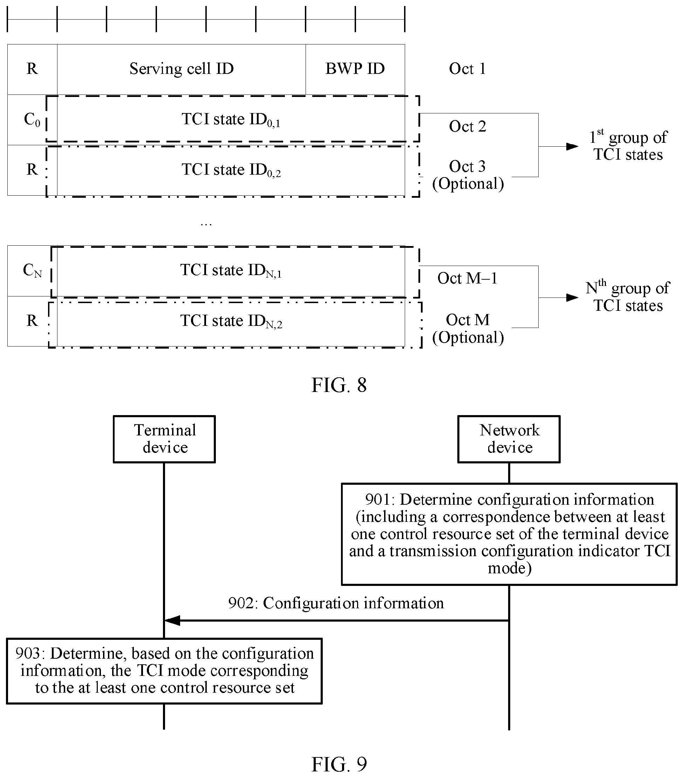

The following describes a diagram of a structure of a MAC CE in the SDCI scenario with reference to FIG. 8.

FIG. 8 is a diagram of a signaling format of a MAC CE according to an embodiment of this application. Refer to FIG. 8. The network device sends a MAC CE to the terminal device, where the MAC CE is for activating one or more groups of TCI states. The MAC CE activates a maximum of eight groups of TCI states.

An R field is a reserved field. A C field indicates that one codepoint is mapped to one TCI state or two TCI states. For example, when a value of the C field is "0", it indicates that one codepoint is mapped to one TCI state. When the value of the C field is "1", it indicates that one codepoint is mapped to two TCI states.

Because the MAC CE is for activating a maximum of eight groups of TCI states, each group of TCI states corresponds to one codepoint according to an activation sequence of the MAC CE. A codepoint corresponding to each group of TCI states may be represented by using 3 bits. For example, the 1^{st} group of TCI states in the eight groups of TCI state groups corresponds to a codepoint 1, and the codepoint 1 is "000". The 2^{nd} group of TCI states corresponds to a codepoint 2, and the codepoint is 001. By analogy, the 8^{th} group of TCI states corresponds to a codepoint 8, and the codepoint is "111". In this case, the network device may subsequently indicate a TCI state group to the terminal device based on DCI. A value of a TCI field in the DCI is a codepoint corresponding to the group of TCI states. For example, if the value of the TCI field is "000", it indicates that the network device indicates the codepoint 1 to the terminal device. In this case, the terminal device may determine, based on a correspondence between a TCI state group and a codepoint, that the network device indicates a TCI state in the 1^{st} group of TCI states.

When a plurality of TRPs provide services for the terminal device, a TCI state corresponding to the 1^{st} TRP in each group of TCI states may be referred to as a first TCI state, and a TCI state corresponding to the 2^{nd} TRP in each group of TCI states may be referred to as a second TCI state. Each group of TCI states may include one or two first TCI states and one or two second TCI states.

The network device may indicate a TCI mode (which may also be referred to as a beam mode) to the terminal device. Then, the terminal device determines, based on the TCI mode, a beam indicated by the network device for the terminal device. The terminal device may perform communication transmission with the network device by using the beam. However, how the network device indicates the TCI mode to the terminal device to improve performance of transmission between the network device and the terminal device is a problem worth considering.

For example, the network device configures the TCI mode for the terminal device at a cell level. Consequently, flexibility of configuring or indicating a beam by the network device for the terminal device is reduced. For example, in the mTRP scenario, different TRPs use the cell-specific TCI mode. In some scenarios, the TCI mode cannot be applicable to transmission of each TRP. Consequently, the terminal device cannot normally communicate with the TRP, and communication transmission performance is poor.

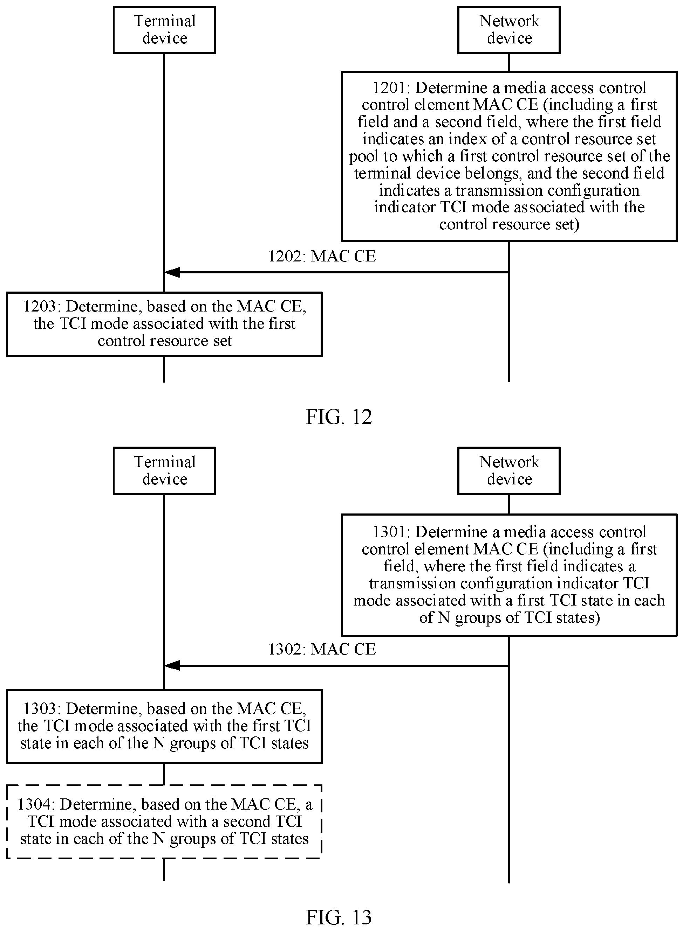

This application provides a corresponding technical solution, so that a network device configures a TCI mode for a terminal device at a control resource set level (namely, a TRP level). In this way, flexibility of configuring or indicating a beam by the network device for the terminal device is improved, and communication transmission performance is improved. For details, refer to related descriptions of the embodiments shown in FIG. 9 and FIG. 13 below.

In this application, the TCI mode may also be referred to as a beam mode, and the TCI mode and the beam mode may be equivalent.

The technical solutions of this application are described below with reference to specific embodiments.

FIG. 9 is a diagram of an embodiment of a TCI mode configuration method according to an embodiment of this application. Refer to FIG. 9. The method includes the following steps.

901: A network device determines configuration information. The configuration information includes a correspondence between at least one control resource set of a terminal device and a TCI mode.

Each of the at least one control resource set corresponds to one TCI mode. TCI modes corresponding to different control resource sets may be the same or may be different. The configuration information may include a correspondence between each of the at least one control resource set and a TCI mode.

It can be learned from the foregoing related descriptions that each control resource set of the terminal device corresponds to one TRP. Different control resource sets may correspond to different TRPs.

The TCI mode includes a joint mode or a separate mode. For the TCI mode, refer to related descriptions of the foregoing technical terms.

For example, the following shows an example of the correspondence between the at least one control resource set and the TCI mode by using Table 1.

**Table 1**

| Control resource set (CORESET) | TCI mode |
|---|---|
| CORESET 0 | Joint mode |
| CORESET 1 | Separate mode |

As shown in Table 1, the CORESET 0 corresponds to the joint mode, and the CORESET 1 corresponds to the separate mode.

Optionally, the at least one control resource set belongs to at least one control resource set pool, and the configuration information includes a correspondence between an index of the at least one control resource set pool and the TCI mode.

For example, the following shows an example of the correspondence by using Table 2.

**Table 2**

| Control resource set pool index (CORESETpool Index) | TCI mode |
|---|---|
| CORESET pool 0 | Joint mode |
| CORESET pool 1 | Separate mode |

For example, the at least one control resource set includes a CORESET 0 and a CORESET 1. The CORESET 0 belongs to the CORESET pool 0, and the CORESET 1 belongs to the CORESET pool 1. The CORESET pool 0 corresponds to the joint mode, and the CORESET pool 1 corresponds to the separate mode.

The following describes a possible configuration structure in which the network device configures the correspondence between the at least one control resource set and the TCI mode based on the configuration information.

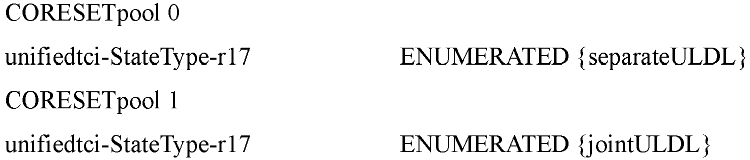

A TCI mode corresponding to the CORESET pool 0 is the separate mode, and a TCI mode corresponding to the CORESET pool 1 is the joint mode.

It can be learned that in step 901, the network device configures the correspondence between the at least one control resource set and the TCI mode for the terminal device. Therefore, the network device configures a corresponding TCI mode for a TRP corresponding to each control resource set. In this way, the network device configures a TCI mode for the terminal device at a TRP level.

It should be noted that optionally, the network device may configure, by using an RRC message, a control resource set pool to which the at least one control resource belongs; or the network device may configure, by using an RRC message, a control resource set pool to which a part of the at least one control resource belongs, and remaining control resource sets belong to a control resource set pool 0 by default.

902: The network device sends the configuration information to the terminal device. Correspondingly, the terminal device receives the configuration information from the network device.

Optionally, the configuration information may be carried in an RRC message.

903: The terminal device determines, based on the configuration information, the TCI mode corresponding to the at least one control resource set.

In the embodiment shown in FIG. 9, the terminal device receives the configuration information from the network device, where the configuration information includes the correspondence between the at least one control resource set of the terminal device and the TCI mode. The terminal device determines, based on the configuration information, the TCI mode corresponding to the at least one control resource set. Because each of the at least one control resource set corresponds to one TRP, different control resource sets correspond to different TRPs. The TRP corresponding to the at least one control resource set is a TRP that provides a service for the terminal device. Therefore, the network device may configure a corresponding TCI mode for each TRP based on the configuration information, and configure a TCI mode for the terminal device at a TRP level (or a control resource set level). This helps the network device configure an appropriate TCI mode for each TRP, thereby improving communication transmission performance. Further, this helps the network device more flexibly configure or indicate a beam for the terminal device.

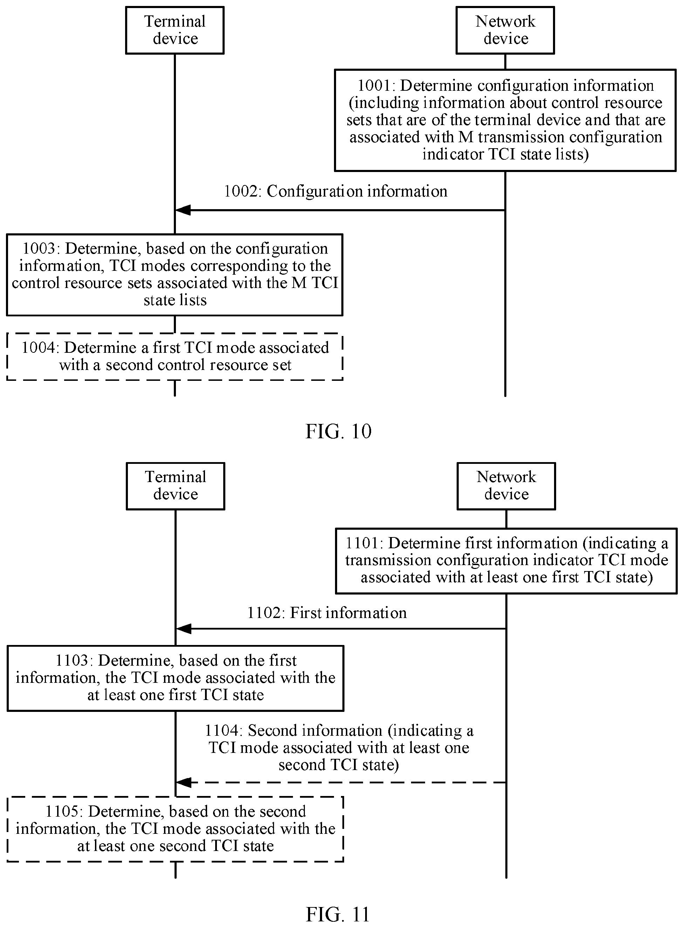

FIG. 10 is a diagram of another embodiment of a TCI mode configuration method according to an embodiment of this application. Refer to FIG. 10. The method includes the following steps.

1001: A network device determines configuration information. The configuration information includes information about control resource sets that are of a terminal device and that are associated with M TCI state lists.

The M TCI state lists include a UL TCI state list and/or a joint/DL TCI state list. M is an integer greater than or equal to 1. Each of the control resource sets associated with the M TCI state lists corresponds to one TRP.

Optionally, the control resource sets associated with the M TCI state lists include a first control resource set.

If a TCI mode associated with the first control resource set is a separate mode, the first control resource set is associated with one UL TCI state list and one joint/DL TCI state list in the M TCI state lists.

If a TCI mode associated with the first control resource set is a joint mode, the first control resource set is associated with one joint/DL TCI state list in the M TCI state lists.

For example, for a TRP that uses the separate mode, the network device needs to associate a control resource set corresponding to the TRP with one UL TCI state list and one joint/DL TCI state list. For a TRP in the joint mode, the network device needs to associate a control resource set corresponding to the TRP with one joint/DL TCI state list.

Optionally, the configuration information further includes N TCI state lists, where N is an integer greater than or equal to 1. The N TCI state lists are TCI state lists configured by the network device for a serving cell in which the terminal device is located. The M TCI state lists belong to the N TCI state lists.

For example, for the serving cell (which may also be referred to as a component carrier (component carrier, CC)) in which the terminal device is located, the network device may configure the N TCI state lists for the serving cell. The N TCI state lists include one or more UL TCI state lists and/or one or more joint/DL TCI state lists. Both a TRP 1 and a TRP 2 provide services for the terminal device, the TRP 1 uses a separate mode, and the TRP 2 uses a joint mode. For the TRP 1, the network device may select one UL TCI state list from the one or more UL TCI state lists and one joint/DL TCI state list from the one or more joint/DL TCI state lists for the TRP 1. Then, the network device associates the UL TCI state list and the joint/DL TCI state list that are selected for the TRP 1 with a control resource set 1 corresponding to the TRP 1. For the TRP 2, the network device may select one joint/DL TCI state list from the one or more joint/DL TCI state lists for the TRP 2, and associate the joint/DL TCI state list with a control resource set 2 corresponding to the TRP 2. In this case, the configuration information in step 1001 may include information about the control resource set 1 and information about the control resource set 2.

Optionally, the control resource sets associated with the M TCI state lists belong to one or more control resource set pools. The configuration information includes an index of the one or more control resource set pools.

For example, the configuration information includes the M TCI state lists, and each TCI state list includes an index of one control resource set pool. Details are shown in Table 3.

**Table 3**

| TCI state list | Control resource set pool index |
|---|---|
| UL TCI state list 1 | CORESET pool 0 |
| Joint/DL TCI state list 1 | CORESET pool 0 |
| Joint/DL TCI state list 2 | CORESET pool 1 |

As shown in Table 3, the M TCI state lists include the UL TCI state list 1, the joint/DL TCI state list 1, and the joint/DL TCI state list 2. The UL TCI state list 1 and the joint/DL TCI state list 1 are associated with the CORESET pool 0, or both the UL TCI state list 1 and the joint/DL TCI state list 1 include the CORESET pool 0. The joint/DL TCI state list 2 is associated with the CORESET pool 1, or the joint/DL TCI state list 2 includes the CORESET pool 1. The CORESET pool 0 is an index of a control resource set pool to which the control resource set corresponding to the TRP 1 belongs. The CORESET pool 1 is an index of a control resource set pool to which the control resource set corresponding to the TRP 2 belongs.

1002: The network device sends the configuration information to the terminal device. Correspondingly, the terminal device receives the configuration information from the network device.

Optionally, the configuration information may be carried in an RRC message.

1003: The terminal device determines, based on the configuration information, TCI modes corresponding to the control resource sets associated with the M TCI state lists.

The TCI mode includes a joint mode and a separate mode. For the TCI mode, refer to related descriptions of the foregoing technical terms.

For example, as shown in Table 3, the terminal device determines, based on the configuration information, that the CORESET pool 0 is associated with the UL TCI state list 1 and the joint/DL TCI state list 1, and that the CORESET pool 1 is associated with the joint/DL TCI state list 2. For a TRP that uses the separate mode, the network device needs to associate a control resource set corresponding to the TRP with one UL TCI state list and one joint/DL TCI state list. For a TRP in the joint mode, the network device needs to associate a control resource set corresponding to the TRP with one joint/DL TCI state list. Therefore, the terminal device may determine the separate mode corresponding to the CORESET pool 0 and the joint mode corresponding to the CORESET pool 1.

It can be learned that, the network device may indirectly or implicitly configure, based on the control resource sets associated with the M TCI state lists, the TCI modes corresponding to the control resource sets. One control resource set corresponds to one TRP. Therefore, the network device configures a TCI mode for the terminal device at a TRP level (a control resource set level). This helps the network device configure an appropriate TCI mode for each TRP, thereby improving communication transmission performance. Further, this helps the network device more flexibly configure or indicate a beam for the terminal device.

Optionally, the embodiment shown in FIG. 10 further includes step 1004. Step 1004 may be performed after step 1002.

1004: The terminal device determines a first TCI mode associated with a second control resource set.

The first TCI mode is a TCI mode configured for the serving cell in which the terminal device is located. The second control resource set is a control resource set of the terminal device other than the control resource sets associated with the M TCI state lists.

Specifically, the network device may configure the first TCI mode for the serving cell in which the terminal device is located. The first TCI mode may be referred to as a cell-specific TCI mode of the terminal device. If the second control resource set is a control resource set of the terminal device other than the control resource sets associated with the M TCI state lists, the terminal device may determine that a TCI mode corresponding to the second control resource set is the first TCI mode.

For example, the second control resource set is a control resource set that is associated with no TCI state list by default, or a control resource set for which the network device does not explicitly configure a TCI mode. The terminal device may consider by default that the second control resource set is associated with the first TCI mode. The first TCI mode may be a joint mode or a separate mode.

For example, the terminal device includes the first control resource set and the second control resource set. The configuration information in step 1001 includes only information indicating that the M TCI state lists are associated with the first control resource set. The terminal device may consider by default that the second control resource set is associated with the first TCI mode.

In the embodiment shown in FIG. 10, the network device may configure, for the terminal device based on the configuration information, the information about the control resource sets associated with the M TCI state lists. Each of the control resource sets associated with the M TCI state lists corresponds to one TRP. For a TRP that uses the separate mode, a control resource set corresponding to the TRP needs to be associated with one UL TCI state list and one joint/DL TCI state list. For a TRP in the joint mode, a control resource set corresponding to the TRP needs to be associated with one joint/DL TCI state list. Therefore, the network device configures, by using the control resource sets associated with the M TCI state lists, the TCI modes corresponding to the control resource sets. In other words, the network device may configure a corresponding TCI mode for each TRP based on the configuration information. Therefore, the network device configures a TCI mode for the terminal device at a TRP level (or a control resource set level). This helps the network device configure an appropriate TCI mode for each TRP, thereby improving communication transmission performance. Further, this helps the network device more flexibly configure or indicate a beam for the terminal device.

FIG. 11 is a diagram of another embodiment of a TCI mode configuration method according to an embodiment of this application. Refer to FIG. 11. The method includes the following steps.

1101: A network device determines first information. The first information indicates a TCI mode associated with at least one first TCI state.

The at least one first TCI state is activated or indicated by the network device for a terminal device.

For example, the at least one first TCI state may be activated by the network device for the terminal device by using a MAC CE. Alternatively, the at least one first TCI state may be indicated by the network device to the terminal device based on DCI.

For the TCI mode, refer to related descriptions of the foregoing technical terms.

The first information may alternatively be described as: The first information indicates a TCI mode associated with a TRP corresponding to the at least one first TCI state. The at least one first TCI state is a TCI state corresponding to a first TRP.

Optionally, when a TRP (that is, the first TRP) provides a service for the terminal device, the at least one first TCI state may be a TCI state corresponding to the first TRP. A beam corresponding to the at least one first TCI state may be for communication transmission between the first TRP and the terminal device.

In this implementation, the network device may be the first TRP, or may be a device including the first TRP. This is not specifically limited in this application.

In this implementation, the first information indicates the TCI mode associated with the at least one first TCI state. It may be understood that the at least one first TCI state is a TCI state corresponding to the first TRP. Therefore, the TCI mode indicated by the first information is a TCI mode corresponding to the first TRP.

Optionally, when a plurality of TRPs provide services for the terminal device, the at least one first TCI state may be a TCI state of the first TRP. A beam corresponding to the at least one first TCI state may be for communication transmission between the first TRP and the terminal device. The first TRP is the 1^{st} TRP in the plurality of TRPs.

In this implementation, the network device may be one of the plurality of TRPs, or may be a device including the plurality of TRPs. This is not specifically limited in this application.

In this implementation, the first information indicates the TCI mode associated with the at least one first TCI state. It may be understood that the at least one first TCI state is a TCI state corresponding to a first TRP. Therefore, the TCI mode indicated by the first information is a TCI mode corresponding to the first TRP.

1102: The network device sends the first information to the terminal device. Correspondingly, the terminal device receives the first information from the network device.

Optionally, the first information is carried in an RRC message, a MAC CE, or DCI. This is not specifically limited in this application.

1103: The terminal device determines, based on the first information, the TCI mode associated with the at least one first TCI state.

Step 1103 may alternatively be described as: The terminal device determines, based on the first information, the TCI mode associated with the TRP corresponding to the at least one first TCI state.

For example, when a plurality of TRPs provide services for the terminal device, the at least one first TCI state is a TCI state of a first TRP. The first information indicates a TCI mode associated with the first TRP. Therefore, the terminal device may determine, based on the first information, the TCI mode associated with the first TRP.

It can be learned that the network device indicates, to the terminal device based on the first information, the TCI mode associated with the at least one first TCI state. The at least one first TCI state is a TCI state of a specific TRP. Therefore, the network device may indicate, based on the first information, a TCI mode associated with the TRP. Therefore, the network device configures a TCI mode for the terminal device at a TRP level. Compared with a solution in which the network device configures a TCI mode for the terminal device at a cell level, the technical solution in this application helps the network device configure an appropriate TCI mode for each TRP, thereby improving communication transmission performance. Further, this helps the network device more flexibly configure or indicate a beam for the terminal device.

Optionally, the embodiment shown in FIG. 11 further includes step 1104 and step 1105. Step 1104 and step 1105 may be performed after step 1103.

1104: The network device sends second information to the terminal device. Correspondingly, the terminal device receives the second information from the network device.

The second information indicates a TCI mode associated with at least one second TCI state. The at least one second TCI state is activated or indicated by the network device for the terminal device.

The second information is similar to the first information. For details, refer to the foregoing related descriptions of the first information.

A function of the second information may alternatively be described as follows: The second information indicates a TCI mode associated with a TRP corresponding to the at least one second TCI state.

Specifically, when a plurality of TRPs provide services for the terminal device, the at least one first TCI state may be a TCI state of the first TRP. The at least one second TCI state may be a TCI state of a second TRP. A beam corresponding to the at least one first TCI state may be for communication transmission between the first TRP and the terminal device. A beam corresponding to the at least one second TCI state may be for communication transmission between the second TRP and the terminal device. The first TRP may be the 1^{st} TRP in the plurality of TRPs. The second TRP may be the 2^{nd} TRP in the plurality of TRPs.

In this implementation, the first information indicates the TCI mode associated with the at least one first TCI state. The second information indicates the TCI mode associated with the at least one second TCI state. It may be understood that the at least one first TCI state is a TCI state corresponding to the first TRP. The at least one second TCI state is a TCI state corresponding to the second TRP. Therefore, the first information indicates a TCI mode of the first TRP. The second information indicates a TCI mode of the second TRP.

Optionally, the at least one first TCI state and the at least one second TCI state are activated by the network device for the terminal device by using different MAC CEs. Alternatively, the at least one first TCI state and the at least one second TCI state are indicated by the network device to the terminal device by using different DCI.

For example, in an MDCI scenario, the network device sends a MAC CE 1 to the terminal device, where the MAC CE 1 is for activating the at least one first TCI state. The network device sends a MAC CE 2 to the terminal device, where the MAC CE 2 is for activating the at least one second TCI state.

Optionally, the at least one first TCI state and the at least one second TCI state are activated by the network device for the terminal device by using a same MAC CE. Alternatively, the at least one first TCI state and the at least one second TCI state are indicated by the network device to the terminal device by using same DCI.

The at least one first TCI state and the at least one second TCI state form at least one group of TCI states.

For example, in an SDCI scenario, the network device may indicate the at least one group of TCI states to the terminal device by using one MAC CE. Each group of TCI states in the at least one group of TCI states may include a first TCI state and a second TCI state.

For example, as shown in FIG. 8, the MAC CE indicates N groups of TCI states, and each group of TCI states includes a first TCI state and a second TCI state.

Optionally, in the at least one group of TCI states, a quantity of TCI states included in each group of TCI states is determined based on the TCI mode associated with the at least one first TCI state and the TCI mode associated with the at least one first TCI state.

For a TRP that uses a joint mode, the network device needs to indicate one joint/DL TCI state to the terminal device, where the joint/DL TCI state is used by the TRP to perform uplink and downlink transmission with the terminal device.

For a TRP that uses a separate mode, the network device needs to indicate one joint/DL TCI state and one UL TCI state to the terminal device. The joint/DL TCI state is used by the TRP to perform downlink transmission with the terminal device. The UL TCI state is used by the TRP to perform uplink transmission with the terminal device.

For example, the at least one first TCI state is associated with a separate mode and the at least one second TCI state is associated with a joint mode, or the at least one first TCI state is associated with a joint mode and the at least one second TCI state is associated with a separate mode. Each group of TCI states may include a maximum of three TCI states.

For example, the at least one first TCI state is associated with a separate mode, the at least one second TCI state is associated with a separate mode, and each group of TCI states may include a maximum of four TCI states.

For example, the at least one first TCI state is associated with a joint mode, the at least one second TCI state is associated with a joint mode, and each group of TCI states may include a maximum of two TCI states.

The following describes, with reference to the TCI mode associated with the at least one first TCI state and the TCI mode associated with the at least one second TCI state, a TCI state included in each group of TCI states.
1. If the at least one first TCI state is associated with a joint mode, and the at least one second TCI state is associated with a separate mode, each group of TCI states may include one first TCI state and one or two second TCI states.
2. If the at least one first TCI state is associated with a separate mode, and the at least one second TCI state is associated with a joint mode, each group of TCI states may include one or two first TCI states and one first TCI state.
3. If the at least one first TCI state and the at least one second TCI state are both associated with a joint mode, each group of TCI states may include one first TCI state and one second TCI state.
4. If the at least one first TCI state and the at least one second TCI state are both associated with a separate mode, each group of TCI states may include one or two first TCI states and one or two second TCI states.

It should be noted that any group of TCI states may include only a first TCI state or only a second TCI state. In this case, that the network device indicates the group of TCI states to the terminal device means that the network device indicates the terminal device to perform transmission by using a single TRP or updates a beam corresponding to only one TRP. For example, the network device indicates a group of TCI states to the terminal device, and the group of TCI states includes only at least one first TCI state. The at least one first TCI state is a TCI state corresponding to a first TRP. In this case, the terminal device is switched from mTRP transmission to single-TRP transmission. The terminal device may perform transmission with the first TRP based on the at least one first TCI state, and no longer perform transmission with the second TRP. Alternatively, the terminal device performs transmission with the first TRP by using at least one TCI state (an updated TCI state corresponding to the first TRP), and a TCI state for transmission between the terminal device and the second TRP remains unchanged.

1105: The terminal device determines, based on the second information, the TCI mode associated with the at least one second TCI state.

It should be noted that optionally, the first information and the second information may be carried in a same RRC message.

For example, the network device sends a serving cell configuration (serving cell config) to the terminal device. The serving cell configuration is carried in an RRC message. The serving cell configuration includes the first information and the second information. The following describes a possible configuration structure of the first information and the second information.
unifiedtci-StateType-r17 Sequence {ENUMERATED {separateULDL, jointULDL}, ENUMERATED {separateULDL, jointULDL}

For example, if the first information indicates a separate mode, and the second information indicates a joint mode, the configuration structure of the first information and the second information is as follows:
unifiedtci-StateType-r17 Sequence {ENUMERATED {separateULDL}, ENUMERATED {jointULDL}

It should be noted that the process of step 1101 to step 1105 in the embodiment shown in FIG. 11 is described by using an example in which the network device separately configures the TCI modes for the first TRP and the second TRP. When a plurality of TRPs provide services for the terminal device, for a process in which the network device configures a TCI mode for each TRP and the terminal device determines the TCI mode of the TRP, refer to the foregoing process in step 1101 to step 1103.

In the embodiment shown in FIG. 11, the terminal device receives the first information from the network device. The first information indicates the TCI mode associated with the at least one first TCI state. The at least one first TCI state is activated by the network device for the terminal device. The terminal device determines, based on the first information, the TCI mode associated with the at least one first TCI state. It can be learned that the network device may configure the TCI mode for the at least one first TCI state. The at least one first TCI state may be a TCI state corresponding to a specific TRP. Therefore, the network device configures a TCI mode for the terminal device at a TRP level (or a TCI state level). This helps the network device configure an appropriate TCI mode for each TRP, thereby improving communication transmission performance. Further, this helps the network device more flexibly configure or indicate a beam for the terminal device.

FIG. 12 is a diagram of another embodiment of a TCI mode configuration method according to an embodiment of this application. Refer to FIG. 12. The method includes the following steps.

1201: A network device determines a MAC CE. The MAC CE includes a first field and a second field. The first field indicates an index of a control resource set pool to which a first control resource set of a terminal device belongs. The second field indicates a TCI mode associated with the first control resource set.

The first control resource set corresponds to one TRP. The TRP is configured to provide a service for the terminal device, and communication transmission may be performed between the terminal device and the TRP. The MAC CE is used by the network device to activate one or more TCI states for the terminal device.

For the TCI mode, refer to related descriptions of the foregoing technical terms.

For example, as shown in FIG. 7, in an MDCI scenario, the first field is the control resource set index field in the MAC CE shown in FIG. 7. Alternatively, the first field may be a reserved field R in the MAC CE. The reserved field R in the MAC CE indicates an index of the control resource set pool (CORESETpool Index) to which the first control resource set belongs. In the technical solution of this application, the network device newly adds the second field to the MAC CE, or the network device uses an existing field in the MAC CE as the second field. The second field indicates the TCI mode associated with the first control resource set.

For example, the second field is 1 bit. When a value of the second field is "0", it indicates that the first control resource set is associated with a joint mode. When the value of the second field is "1", it indicates that the first control resource set is associated with a separate mode.

For example, the second field is 1 bit. When the value of the second field is "0", it indicates that the first control resource set is associated with a separate mode. When the value of the second field is "1", it indicates that the first control resource set is a joint separate mode.

1202: The network device sends the MAC CE to the terminal device. Correspondingly, the terminal device receives the MAC CE from the network device.

1203: The terminal device determines, based on the MAC CE, the TCI mode associated with the first control resource set.

For the MAC CE, refer to related descriptions of step 1201.

The terminal device determines, based on the first field in the MAC CE, the index of the control resource set pool to which the first control resource set belongs, and determines, based on the field in the MAC CE, the TCI mode associated with the first control resource set.

It can be learned that the network device configures the corresponding TCI mode for the first control resource set based on a current signaling format of the MAC CE. The signaling format of the MAC CE is slightly changed, which helps the solution adapt to a current communication system.

In the embodiment shown in FIG. 12, the terminal device receives the MAC CE from the network device. The MAC CE includes the first field and the second field, the first field indicates the index of the control resource set pool to which the first control resource set of the terminal device belongs, and the second field indicates the TCI mode associated with the first control resource set. The terminal device determines, based on the MAC CE, the TCI mode associated with the first control resource set. The first control resource set corresponds to one TRP. Therefore, the network device configures a TCI mode for the terminal device at a TRP level (or a control resource set level). This helps the network device configure an appropriate TCI mode for each TRP, thereby improving communication transmission performance. Further, this helps the network device more flexibly configure or indicate a beam for the terminal device.

FIG. 13 is a diagram of another embodiment of a TCI mode configuration method according to an embodiment of this application. Refer to FIG. 13. The method includes the following steps.

1301: A network device determines a MAC CE. The MAC CE includes a first field, and the first field indicates a TCI mode associated with a first TCI state in each of N groups of TCI states.

The N groups of TCI states are activated by the network device for a terminal device.

For example, the network device activates the N groups of TCI states for the terminal device based on the MAC CE in step 1301. For example, as shown in FIG. 8, the MAC CE indicates the N groups of TCI states. In the technical solution of this application, the MAC CE further includes a first field, and the first field indicates the TCI mode associated with the first TCI state in each of the N groups of TCI states.

Optionally, the first field may be a bit in the MAC CE shown in FIG. 8, or the first field is a newly added field in the MAC CE. For example, as shown in FIG. 8, R is a reserved field. The network device indicates, by using the reserved field in the MAC CE, the TCI mode associated with the first TCI state in each of the N groups of TCI states.

Optionally, the first TCI state in each group of TCI states is a TCI state corresponding to a first TRP. A function of the first field may alternatively be: The first field indicates a TCI mode associated with the first TRP corresponding to the first TCI state in each group of TCI states.

It may be understood that, when a plurality of TRPs provide services for the terminal device, the first TCI state in each of the N groups of TCI states is a TCI state of the 1^{st} TRP in the plurality of TRPs. The first TRP is the 1^{st} TRP in the plurality of TRPs.

1302: The network device sends the MAC CE to the terminal device. Correspondingly, the terminal device receives the MAC CE from the network device.

1303: The terminal device determines, based on the MAC CE, the TCI mode associated with the first TCI state in each of the N groups of TCI states.

Optionally, step 1303 may alternatively be described as: The terminal device determines, based on the MAC CE, the TCI mode associated with the first TRP corresponding to the first TCI state in each of the N groups of TCI states.

It can be learned that the network device may configure the TCI mode for the first TCI state in each group of TCI states. The first TCI state in each group of TCI states is the TCI state corresponding to the first TRP. Therefore, the network device configures a TCI mode for the terminal device at a TRP level (or a TCI state level). This helps the network device configure an appropriate TCI mode for each TRP, thereby improving communication transmission performance. Further, this helps the network device more flexibly configure or indicate a beam for the terminal device.

Optionally, the MAC CE further includes a second field, and the second field indicates a TCI mode associated with a second TCI state in each of the N groups of TCI states.

The second field is similar to the first field. For details, refer to the foregoing related descriptions of the first field.

Optionally, the second TCI state in each group of TCI states is a TCI state corresponding to a second TRP. A function of the second field may alternatively be: The second field indicates a TCI mode associated with the second TRP corresponding to the second TCI state in each group of TCI states.

It may be understood that, when a plurality of TRPs provide services for the terminal device, the second TCI state in each of the N groups of TCI states is a TCI state of the 2^{nd} TRP in the plurality of TRPs. The second TRP is the 2^{nd} TRP in the plurality of TRPs.

Based on this implementation, optionally, the embodiment shown in FIG. 13 further includes step 1304. Step 1304 may be performed after step 1302.

1304: The terminal device determines, based on the MAC CE, the TCI mode associated with the second TCI state in each of the N groups of TCI states.

Optionally, step 1303 may alternatively be described as: The terminal device determines, based on the MAC CE, the TCI mode associated with the second TRP corresponding to the second TCI state in each of the N groups of TCI states.

It should be noted that there is no fixed execution sequence between step 1303 and step 1304. Step 1303 may be performed before step 1304; step 1304 is performed before step 1303; or step 1303 and step 1304 are simultaneously performed based on a situation. This is not specifically limited in this application.

It should be noted that the MAC CE is described in step 1301 to step 1304 by using an example in which the first TRP and the second TRP provide services for the terminal device. If there is another TRP that provides a service for the terminal device, the MAC CE may also include a corresponding field, to indicate a TCI mode associated with the another TRP. This is not specifically limited in this application.

For example, a cell-specific TCI mode configured by the network device for the terminal device is a joint mode. The network device indicates a joint/DL TCI state to the terminal device. A beam corresponding to the joint/DL TCI state is for uplink and downlink transmission of the terminal device. When a plurality of TRPs (for example, a TRP 1 and a TRP 2) provide services for the terminal device, and an uplink beam and a downlink beam do not match because of a factor such as a human body blocking on one side (for example, a direction in which the TRP 1 is located) of the terminal device, the network device may configure a separate mode for the TRP 1, and indicate a corresponding TCI state to the terminal device. Specifically, the network device may configure a corresponding TCI mode for the TRP 1 by using the technical solution in any one of the embodiments shown in FIG. 9 to FIG. 13. In this way, the terminal device and the TRP 1 perform communication transmission by using a beam corresponding to the TCI state, to implement normal communication transmission between the terminal device and the TRP 1, thereby improving communication transmission performance. However, the terminal device still performs communication transmission with the TRP 1 by using the uplink and downlink beams. In the joint mode, the network device needs to indicate only one TCI state to the terminal device, which helps reduce indication overheads of the network device.

Currently, in a communication system, a network device configures one UL TCI state list and one DL/joint TCI state list for a terminal device. If a TCI mode of a serving cell in which the terminal device is located is configured as a joint mode, the network device selects a DL/joint TCI state from the DL/joint TCI state list, and activates or indicates the selected DL/joint TCI state to the terminal device. If the TCI mode of the serving cell in which the terminal device is located is configured as a separate mode, the network device selects a UL TCI state from the UL TCI state list and selects a DL/joint TCI state from the DL/joint TCI state list. Then, the network device indicates the selected DL/joint TCI state and the selected DL/joint TCI state to the terminal device.

The foregoing technical solution is mainly a process in which the network device activates or indicates a TCI state to the terminal device in a scenario in which the terminal device performs communication transmission with a single TRP.

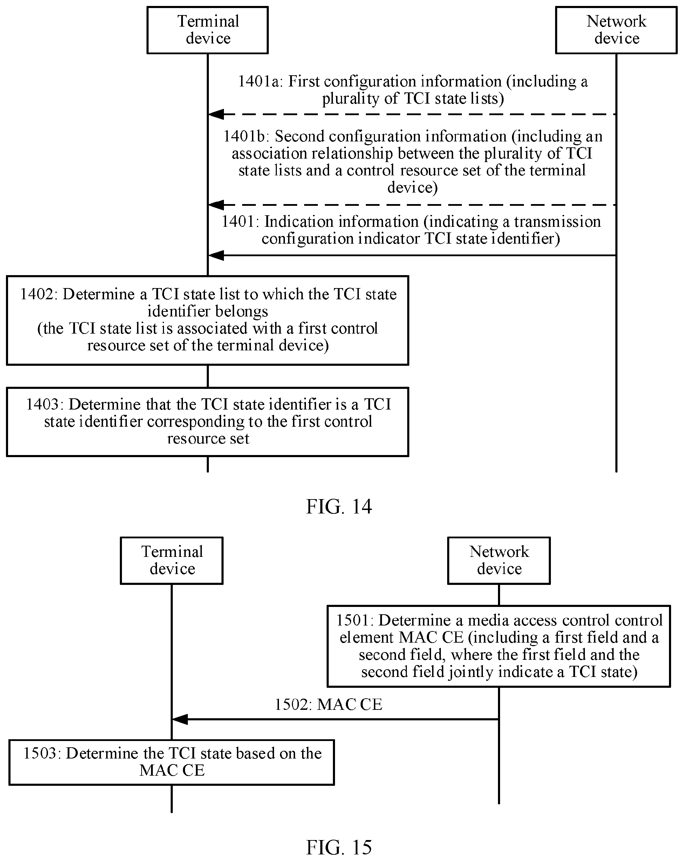

However, when a plurality of TRPs perform communication transmission with the terminal device, how the network device activates or indicates a TCI state to the terminal device is an urgent problem to be resolved. This application provides a corresponding technical solution, so that the network device activates or indicates a TCI state to each TRP. For details, refer to related descriptions of the embodiment shown in FIG. 14 below.

FIG. 14 is a diagram of another embodiment of a TCI state indication method according to an embodiment of this application. Refer to FIG. 14. The method includes the following steps.

1401: A network device sends indication information to a terminal device. The indication information indicates a TCI state identifier. Correspondingly, the terminal device receives the indication information from the network device.

Optionally, the indication information is carried in a MAC CE or DCI.

1402: The terminal device determines a TCI state list to which the TCI state identifier belongs. The TCI state list is associated with a first control resource set of the terminal device.

In this embodiment, a plurality of TCI state lists are configured in the terminal device. The plurality of TCI state lists include P UL TCI state lists and Q DL/joint TCI state lists.

TCI state identifiers in different UL TCI state lists in the P UL TCI state lists are different, and TCI state identifiers in different DL/joint TCI state lists in the Q DL/joint TCI state lists are different. P is an integer greater than or equal to 2, and Q is an integer greater than or equal to 2.

For example, the plurality of TCI state lists include a DL/joint TCI state list 1, a DL/joint TCI state list 2, a UL TCI state list 1, and a UL TCI state list 2.

TCI state identifiers included in the DL/joint TCI state list 1 are {0, 2, 5, ...}. TCI state identifiers included in the DL/joint TCI state list 2 are {1, 3, 4, ...}. TCI state identifiers included in the UL TCI state list 1 are {0, 4, 9, ...}. TCI state identifiers included in the UL TCI state list 2 are {3, 5, 8, ...}.

It may be understood that, in TCI state lists of a same type, TCI state identifiers in different TCI state lists are different. In other words, in a same type of TCI states, an identifier of a TCI state is globally unique, and identifiers of different TCI states are different. Therefore, in step 1402, the terminal device may uniquely determine, based on the TCI state identifier, the TCI state list to which the TCI state identifier belongs. The TCI state list is associated with the first control resource set.

Optionally, the embodiment shown in FIG. 14 further includes step 1401a. Step 1401a may be performed before step 1402.

1401a: The network device sends first configuration information to the terminal device. The first configuration information includes the plurality of TCI state lists. Correspondingly, the terminal device receives the first configuration information from the network device.

For the plurality of TCI state lists, refer to the foregoing related descriptions.

Optionally, the first configuration information may be carried in an RRC message.

There is no fixed execution sequence between step 1401a and step 1401. Step 1401 is performed before step 1401a; step 1401a is performed before step 1401; or step 1401 and step 1401a are simultaneously performed based on a situation. This is not specifically limited in this application.

Each of the plurality of TCI state lists may be associated with one control resource set. For example, each of the P UL TCI state lists is associated with one control resource set of the terminal device, and different UL TCI state lists are associated with different control resource sets. Each of the Q DL/joint TCI state lists is associated with one control resource set of the terminal device, and different DL/joint TCI state lists are associated with different control resource sets.

In a possible implementation, a control resource set of the terminal device includes a first control resource set and a second control resource set. In the P UL TCI state lists, a UL TCI state list whose index is 0 is associated with the first control resource set of the terminal device, and a UL TCI state list whose index is 1 is associated with the second control resource set of the terminal device. In the Q DL/joint TCI state lists, a DL/joint TCI state list whose index is 0 corresponds to the first control resource set, and a DL/joint TCI state list whose index is 1 corresponds to the second control resource set.

Specifically, the network device configures two UL TCI state lists and two DL/joint TCI state lists for the terminal device. Each TCI state list has an index. A UL TCI state list whose index is 0 is associated with the first control resource set by default, and a UL TCI state list whose index is 1 is associated with the second control resource set by default. A DL/joint TCI state list whose index is 0 is associated with the first control resource set by default, and a DL/joint TCI state list whose index is 1 is associated with the second control resource set by default.

In another possible implementation, the network device may configure an association relationship between the plurality of TCI state lists and a control resource set of the terminal device for the terminal device based on configuration information.

Based on this implementation, optionally, the embodiment shown in FIG. 14 further includes step 1401b. Step 1401b may be performed before step 1402.

1401b: The network device sends second configuration information to the terminal device. The second configuration information includes the association relationship between the plurality of TCI state lists and the control resource set of the terminal device. Correspondingly, the terminal device receives the second configuration information from the network device.

Optionally, the control resource set of the terminal device belongs to one or more control resource set pools. The second configuration information includes an association relationship between the plurality of TCI state lists and the one or more control resource set pools.

For example, the following uses Table 4 to show the association relationship.

**Table 4**

| TCI state list | Control resource set pool index |
|---|---|
| UL TCI state list 1 | Control resource set pool index 1 |
| UL TCI state list 2 | Control resource set pool index 2 |
| DL/joint TCI state list 2 | Control resource set pool index 1 |
| DL/joint TCI state list 1 | Control resource set pool index 2 |

The control resource set of the terminal device includes the first control resource set and the second control resource set. The first control resource set belongs to the control resource set pool index 1. The second control resource set belongs to the control resource set pool index 2. As shown in Table 4, both the UL TCI state list 1 and the DL/joint TCI state list 2 are associated with the control resource set pool index 1. Both the UL TCI state list 2 and the DL/joint TCI state list 1 are associated with the control resource set pool index 2.

Optionally, in the control resource set of the terminal device, one control resource set corresponds to one TRP, and different control resource sets may correspond to different TRPs.

For example, the control resource set of the terminal device includes the first control resource set and the second control resource set. The first control resource set corresponds to a first TRP, and the second control resource set corresponds to a second TRP. The first TRP and the second TRP are configured to perform communication transmission with the terminal device. For example, the first TRP may be the 1^{st} TRP in a plurality of TRPs, and the second TRP may be the 2^{nd} TRP in the plurality of TRPs. The plurality of TRPs are configured to perform communication transmission with the terminal device.

Optionally, the first configuration information and the second configuration information may be same configuration information, or may be different configuration information. This is not specifically limited in this application.

It should be noted that there is no fixed execution sequence among step 1401b, step 1401a, and step 1401. Step 1401 is first performed, step 1401a is then performed, and step 1401b is finally performed; step 1401a is first performed, step 1401b is then performed, and step 1401a is finally performed; step 1401a is first performed, step 1401b is then performed, and step 1401 is finally performed; step 1401b is first performed, step 1401a is then performed, and step 1401 is finally performed; or step 1401b, step 1401a, and step 1401 are simultaneously performed based on a situation. This is not specifically limited in this application.

1403: The terminal device determines that the TCI state identifier is a TCI state identifier corresponding to the first control resource set.

The TCI state identifier is associated with the first control resource set.

For example, the first control resource set corresponds to the first TRP, and the TCI state identifier corresponds to a beam 1. The terminal device determines that the beam 1 corresponding to the TCI state identifier is a beam of the first TRP.

For example, for the first TRP, the network device has indicated the UL TCI state 1 and the DL/joint TCI state 0 to the terminal device. The network device indicates the DL/joint TCI state 2 to the terminal device again based on the MAC CE in step 1401. The DL/joint TCI state 0 and the DL/joint TCI state 2 belong to a same TCI state list. Therefore, the terminal device may determine that the network device updates a TCI state identifier corresponding to a control resource set (or a TRP corresponding to the control resource set, that is, the first TRP) associated with the TCI state list.

For example, as shown in Table 5, both the UL TCI state list 1 and the DL/joint TCI state 2 are associated with the first control resource set. The first control resource set corresponds to the first TRP. The network device activates a TCI state shown in Table 5 for the terminal device.

**Table 5**

| | |
|---|---|
| UL TCI state list 1 | DL/joint TCI state 2 |
| TCI state identifier 2 | TCI state identifier 3 |
| TCI state identifier 35 | TCI state identifier 4 |
| TCI state identifier 45 | TCI state identifier 28 |

The network device sends a MAC CE to the terminal device again, where the MAC CE is for activating the TCI state identifier 5, the TCI state identifier 0, and the TCI state identifier 13. Because the TCI state identifier 5, the TCI state identifier 0, and the TCI state identifier 13 belong to the UL TCI state list 1, the terminal device may determine that the network device updates a TCI state identifier in the UL TCI state list 1 in Table 5. Specific updates are shown in Table 6:

**Table 6**

| | |
|---|---|
| UL TCI state list 1 | DL/joint TCI state 2 |
| TCI state identifier 5 | TCI state identifier 3 |
| TCI state identifier 0 | TCI state identifier 4 |
| TCI state identifier 13 | TCI state identifier 28 |

The embodiment shown in FIG. 14 is a process in which the terminal device determines a TCI state identifier that is a TCI state identifier corresponding to a specific control resource set. In actual application, the network device may indicate a plurality of TCI state identifiers, and the terminal device may determine, according to the method provided in the embodiment shown in FIG. 14, each TCI state identifier that is a TCI state identifier corresponding to a specific control resource set. In other words, a specific control resource set whose TCI state identifier is updated by the network device is determined.

The embodiment shown in FIG. 14 shows a technical solution in which the network device configures a plurality of TCI state lists of a same type for the terminal device and TCI state identifiers in different TCI state lists are different. That is, an identifier of each TCI state in TCI states of a same type is globally unique. In actual application, in TCI state lists of a same type, TCI state identifiers in different TCI state lists may alternatively be the same. That is, an identifier of each TCI state in TCI states of a same type is not globally unique. When the network device indicates a TCI state to the terminal device based on the MAC CE, the MAC CE includes an identifier of a TCI state list to which the TCI state belongs. In this way, the terminal device may determine, based on the identifier of the TCI state list, the TCI state list to which the TCI state indicated by the MAC CE belongs. The TCI state list is associated with the first control resource set. In this case, the terminal device can determine that the TCI state is a TCI state corresponding to the first control resource set. In other words, the network device indicates or updates the TCI state corresponding to the first control resource set.

This application further provides another embodiment. This embodiment is similar to the embodiment shown in FIG. 14. A difference lies in that step 1402 is replaced with step 1402a, step 1403 is replaced with step 1403a, and step 1401b is replaced with step 1404.

1402a: The terminal device determines a TCI state list to which the TCI state identifier belongs. The TCI state list is used for a first TRP.

In this embodiment, a plurality of TCI state lists are configured in the terminal device. The plurality of TCI state lists include P UL TCI state lists and Q DL/joint TCI state lists. For the P UL TCI state lists and the Q DL/joint TCI state lists, refer to the foregoing related descriptions.

Each of the plurality of TCI state lists corresponds to one TRP. For example, each of the P UL TCI state lists corresponds to one TRP, and different UL TCI state lists correspond to different TRPs. Each of the Q DL/joint TCI state lists corresponds to one TRP, and different DL/joint TCI state lists correspond to different TRPs.

In a possible implementation, when the first TRP and a second TRP provide services for the terminal device, in the P UL TCI state lists, a UL TCI state list whose index is 0 corresponds to the first TRP, and a UL TCI state list whose index is 1 corresponds to the second TRP. In the Q DL/joint TCI state lists, a DL/joint TCI state list whose index is 0 corresponds to the first TRP, and a DL/joint TCI state list whose index is 1 corresponds to the second TRP. The first TRP may be the 1^{st} TRP in the plurality of TRPs that provide services for the terminal device, and the second TRP may be the 2^{nd} TRP in the plurality of TRPs that provide services for the terminal device.

Specifically, the network device configures two UL TCI state lists and two DL/joint TCI state lists for the terminal device. Each TCI state list has an index. The UL TCI state list whose index is 0 corresponds to the first TRP by default, and the UL TCI state list whose index is 1 corresponds to the second TRP by default. The DL/joint TCI state list whose index is 0 corresponds to the first TRP by default, and the DL/joint TCI state list whose index is 1 corresponds to the second TRP by default.

In another possible implementation, the network device may configure an association relationship between the plurality of TCI state lists and a TRP for the terminal device based on configuration information.

1404: The network device sends second configuration information to the terminal device, where the second configuration information is for configuring the association relationship between the plurality of TCI state lists and the TRP. Correspondingly, the terminal device receives the second configuration information from the network device.

For example, as shown in Table 7, a UL TCI state list 1 corresponds to the first TRP, a DL/joint TCI state list 2 corresponds to the first TRP, a UL TCI state list 2 corresponds to the second TRP, and a DL/joint TCI state list 1 corresponds to the second TRP.

**Table 7**

| TCI state list | TRP |
|---|---|
| UL TCI state list 1 | First TRP |
| UL TCI state list 2 | Second TRP |
| DL/joint TCI state list 2 | First TRP |
| DL/joint TCI state list 1 | Second TRP |

1403a: The terminal device determines that the TCI state identifier is a TCI state identifier of the first TRP.

The TCI state list corresponds to the first TRP.

It can be learned that the terminal device receives the MAC CE from the network device, and the MAC CE indicates the TCI state identifier. The terminal device may determine, based on the TCI state list to which the TCI state identifier belongs, a specific TRP whose TCI state identifier is activated or updated by the network device. For example, the network device previously indicates the TCI state identifier 1 to the terminal device, the TCI state identifier 1 belongs to the UL TCI state list 1, and the UL TCI state list 1 corresponds to the first TRP. The network device indicates the TCI state identifier 2 to the terminal device again. If the TCI state identifier 2 also belongs to the UL TCI state list 1, the terminal device may determine that the network device updates the TCI state of the first TRP. In other words, a TCI state corresponding to the TCI state identifier 2 is used as an updated TCI state of the first TRP. In this case, in a subsequent interaction process, the terminal device may perform uplink transmission with the first TRP by using a beam corresponding to the TCI state identifier 2.

In the foregoing embodiment, a process in which the terminal device determines a TCI state identifier that is a TCI state identifier corresponding to a specific TRP is used as an example to describe the technical solutions of this application. In actual application, the network device may indicate a plurality of TCI state identifiers, and the terminal device may determine, according to the method provided in this embodiment, each TCI state identifier that is a TCI state identifier corresponding to a specific TRP. In other words, a TCI state identifier that corresponds to a specific TRP and that is updated by the network device is determined.

FIG. 15 is a diagram of an embodiment of TCI state indication according to an embodiment of this application. Refer to FIG. 15. The method includes the following steps.

1501: A network device determines a MAC CE.

The MAC CE includes a first field and a second field. The first field and the second field jointly indicate a TCI state. A length of the first field is A bits, and a length of the second field is B bits. A plus B is greater than or equal to 8. Both A and B are integers greater than or equal to 1.

In a possible implementation, the first field and the second field jointly indicate an identifier of the TCI state.

It can be learned that a maximum TCI state identifier that can be jointly indicated by the first field and the second field is 2(A+B). For example, if A is equal to 1, and B is equal to 7, a maximum TCI state identifier that can be jointly indicated by the first field and the second field is 256.

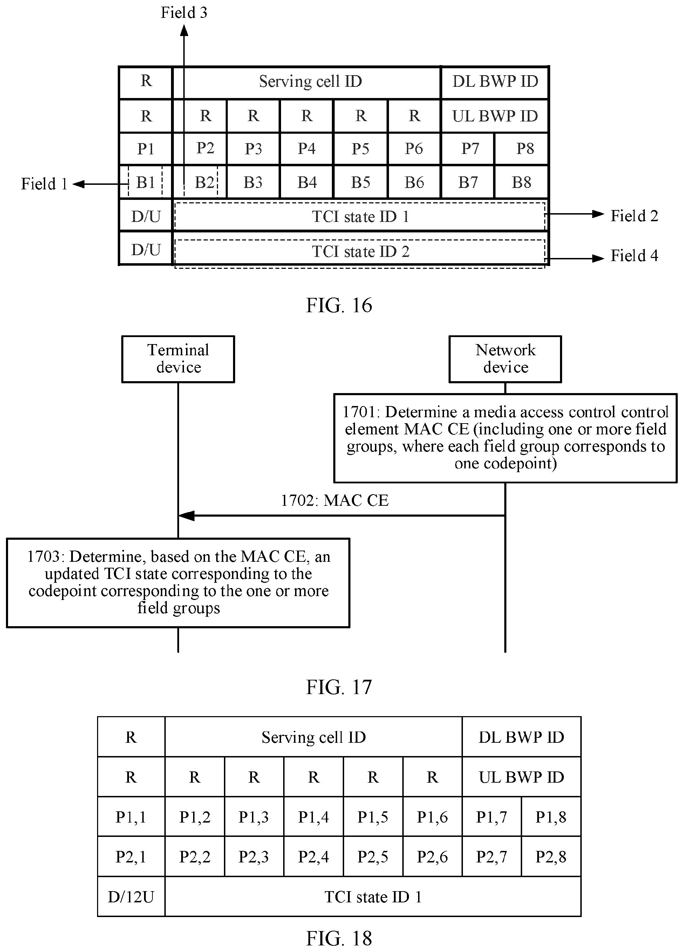

Optionally, the first field and the second field are discontinuous. For example, as shown in FIG. 16, the first field is a field 1, and the second field is a field 2. The field 1 and the field 2 are discontinuous.

Optionally, the first field M is 1 bit, and the second field M is 7 bits. The first field is a most significant bit in bits indicating the TCI state, and the second field is a bit other than the most significant bit in the bits indicating the TCI state.

For example, as shown in FIG. 16, the first field is a field 1, and the second field is a field 2. The field 1 is 1 bit, and the field 2 is 7 bits. The field 1 is a most significant bit in the 8 bits indicating the TCI state, and the field 2 is the last 7 bits in the 8 bits indicating the TCI state. For example, if a value of the field 1 is 1, and a value of the field 2 is 0000001, 8 bits formed by the field 1 and the field 2 are 10000001, that is, the field 1 and the field 2 jointly indicate a TCI state identifier 129.

Optionally, the first field M is 1 bit, and the second field M is 7 bits. The first field is a least significant bit in bits indicating the TCI state, and the second field is a bit other than the least significant bit in the bits indicating the TCI state.

For example, as shown in FIG. 16, the first field is a field 3, and the second field is a field 4. The field 3 is 1 bit, and the field 4 is 7 bits. The field 3 is a least significant bit in the 8 bits indicating the TCI state, and the field 4 is the first 7 bits in the 8 bits indicating the TCI state. For example, if a value of the field 3 is 1, and a value of the field 2 is 1000001, 8 bits formed by the field 3 and the field 4 are 10000011, that is, the field 3 and the field 4 jointly indicate a TCI state identifier 131.

In this implementation, a row is added to the MAC CE, and each bit in the row may indicate a most significant bit or a least significant bit of the TCI state. Fields B1 to B8 shown in FIG. 16 are used as an example. For example, the field B1 may indicate a most significant bit or a least significant bit of a TCI state identifier 1. The field B2 may indicate a most significant bit or a least significant bit of a TCI state identifier 2. If a quantity of TCI states configured by the network device for the terminal device is less than 128, this row does not need to be added to the MAC CE.

1502: The network device sends the MAC CE to the terminal device. Correspondingly, the terminal device receives the MAC CE from the network device.

1503: The terminal device determines the TCI state based on the MAC CE.

For example, as shown in FIG. 16, the first field is a field 1, and the second field is a field 2. The terminal device may determine a TCI state identifier 1 based on the field 1 and the field 2.

It should be noted that the embodiment shown in FIG. 15 is described by using an example in which the terminal device determines one TCI state based on the MAC CE. In actual application, the network device may indicate a plurality of TCI states based on the MAC CE. For a process in which the terminal device determines each TCI state based on the MAC CE, refer to related descriptions of the embodiment shown in FIG. 15.

Each row in the MAC CE includes 8 bits. The 1^{st} bit is a D/U field, indicating whether the last 7 bits indicate a DL TCI state or a UL TCI state. The last 7 bits indicate a TCI state identifier. It can be learned that the last 7 bits can indicate a maximum TCI state identifier 128. If the quantity of TCI states configured by the network device for the terminal device exceeds 128, the last 7 bits in each row in the current MAC CE cannot indicate one TCI state. Therefore, for this problem, this application provides the technical solution of the embodiment shown in FIG. 15. In this way, when the network device configures a large quantity of TCI states for the terminal device, the network device can indicate the TCI states based on the MAC CE.

FIG. 17 is a diagram of another embodiment of a TCI state indication method according to an embodiment of this application. Refer to FIG. 17. The method includes the following steps.

1701: A network device determines a MAC CE. The MAC CE includes one or more field groups. Each field group corresponds to one codepoint.

One codepoint is mapped to a plurality of TCI states, and each field group includes a first field and a second field. For details about the codepoint, refer to the foregoing descriptions.

In each field group, the first field indicates whether the network device uses a TCI state corresponding to a first TRP included in the plurality of TCI states as an updated TCI state of the first TRP, and the second field indicates whether the network device uses a TCI state corresponding to a second TRP included in the plurality of TCI states as an updated TCI state of the second TRP. The plurality of TCI states are TCI states mapped by the codepoint corresponding to the field group.

The MAC CE is for activating TCI states mapped by a codepoint corresponding to one or more field groups. For example, as shown in FIG. 18, the MAC CE indicates at least one group of TCI states, and each group of TCI states is a TCI state mapped by one codepoint.

Optionally, if a value of the first field is 0 and a value of the second field is 1, the TCI state of the second TRP is updated corresponding to a codepoint corresponding to the field group;
if a value of the first field is 1 and a value of the second field is 0, the TCI state of the first TRP is updated corresponding to a codepoint corresponding to the field group; or
if a value of the first field is 1 and a value of the second field is 1, the TCI state of the first TRP and the TCI state of the second TRP are updated corresponding to a codepoint corresponding to the field group.

For example, as shown in FIG. 18, field groups P are added to the MAC CE. P1,1 and P2,1 are a field group 1, P1,2 and P2,2 are a field group 2, P1,3 and P2,3 are a field group 3, and by analogy, P1,8 and P2,8 are a field group 8. It can be learned from this that there are eight groups of fields. The eight groups of field groups correspond to eight codepoints. For example, details are shown in Table 8.

**Table 8**

| Codepoint | TCI state identifier |
|---|---|
| 000 | TCI state identifier 1 corresponding to a first TRP |
| | TCI state identifier 2 corresponding to a second TRP |
| 001 | TCI state identifier 2 corresponding to the first TRP |
| | TCI state identifier 1 corresponding to the second TRP |
| 010 | TCI state identifier 3 corresponding to the first TRP |
| | TCI state identifier 2 corresponding to the second TRP |
| 011 | TCI state identifier 4 corresponding to the first TRP |
| | TCI state identifier 5 corresponding to the second TRP |
| 100 | TCI state identifier 3 corresponding to the first TRP |
| | TCI state identifier 4 corresponding to the second TRP |
| 101 | TCI state identifier 5 corresponding to the first TRP |
| | TCI state identifier 6 corresponding to the second TRP |
| 110 | TCI state identifier 7 corresponding to the first TRP |
| | TCI state identifier 8 corresponding to the second TRP |
| 111 | TCI state identifier 9 corresponding to the first TRP |
| | TCI state identifier 8 corresponding to the second TRP |

It can be learned from Table 8 that one codepoint is mapped to two TCI states. Different codepoints are mapped to different TCI states. For example, if a value of P 1,1 is 1 and a value of P2,1 is 0 in the field group 1, it indicates that the network device updates a TCI state of the first TRP, and an updated TCI state identifier is the TCI state identifier 1. If a value of P1,2 is 0 and a value of P2,2 is 1 in the field group 2, it indicates that the network device updates a TCI state of the second TRP, and an updated TCI state identifier is the TCI state identifier 1. Other field groups are similar, and are not described herein.

1702: The network device sends the MAC CE to the terminal device. Correspondingly, the terminal device receives the MAC CE from the network device.

1703: The terminal device determines, based on the MAC CE, an updated TCI state of a specific TRP corresponding to the codepoint corresponding to the one or more field groups.

For example, as shown in FIG. 18, the terminal device determines, based on the field groups P in the MAC CE, a specific TRP whose TCI state is updated corresponding to a codepoint corresponding to each field group. The network device activates at least one group of TCI states based on the MAC CE, where each group of TCI states is TCI states mapped by one codepoint. In this way, when the network device subsequently indicates a TCI state to the terminal device based on DCI, a value of a TCI field in the DCI is a value of a specific codepoint. In this case, the terminal device may determine, based on the value of the TCI field, a specific TRP whose TCI state is indicated or updated by the network device.

The foregoing method embodiments may be implemented separately or in combination. For terms and related technologies in embodiments, refer to each other. In other words, technical solutions that do not conflict with each other or that do not logically conflict with each other in different embodiments may be combined with each other. This is not specifically limited in this application.

A communication apparatus provided in embodiments of this application is described below.

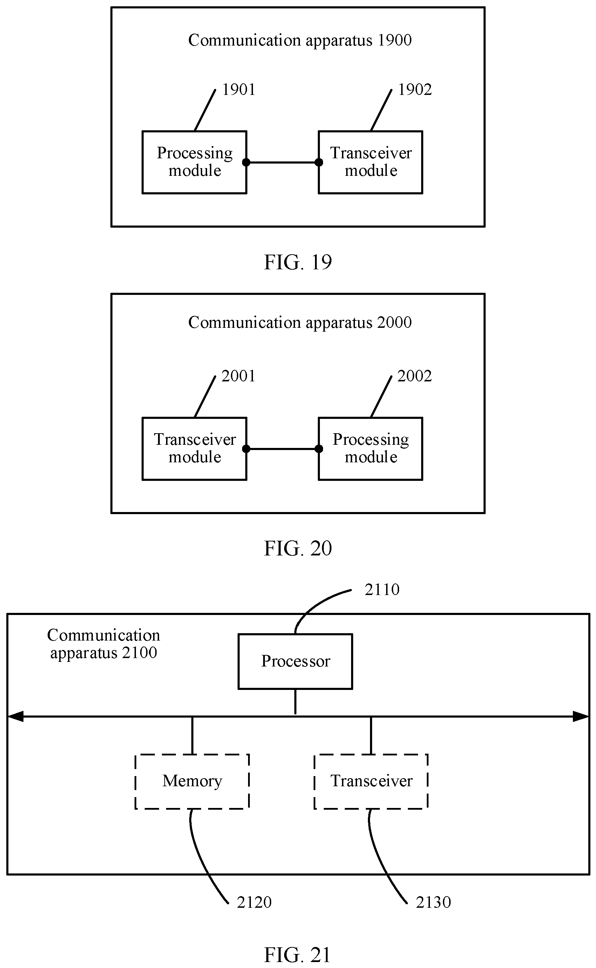

FIG. 19 is a diagram of a structure of a communication apparatus according to an embodiment of this application. Refer to FIG. 19. The communication apparatus may be configured to perform the processes performed by the terminal device in the embodiments shown in FIG. 9 to FIG. 15 and FIG. 17. For details, refer to related descriptions in the foregoing method embodiments.

The communication apparatus 1900 includes a processing module 1901 and a transceiver module 1902. The transceiver module 1902 may implement a corresponding communication function, and the processing module 1901 is configured to perform data processing. The transceiver module 1902 may also be referred to as a communication interface or a communication module.

Optionally, the communication apparatus 1900 may further include a storage module. The storage module may be configured to store instructions and/or data. The processing module 1901 may read the instructions and/or the data in the storage module, so that the communication apparatus implements the foregoing method embodiments.

The communication apparatus module 1900 may be configured to perform an action performed by the terminal device in the foregoing method embodiments. The communication apparatus 1900 may be a terminal device or a component that can be disposed in the terminal device. The processing module 1901 is configured to perform a processing-related operation on a terminal device side in the foregoing method embodiments. Optionally, the transceiver module 1902 is configured to perform a receiving-related operation on the terminal device side in the foregoing method embodiments.

Optionally, the transceiver module 1902 may include a sending module and a receiving module. The sending module is configured to perform a sending operation in the foregoing method embodiments. The receiving module is configured to perform a receiving operation in the foregoing method embodiments.

It should be noted that the communication apparatus 1900 may include a sending module, but does not include a receiving module. Alternatively, the communication apparatus 1900 may include a receiving module, but does not include a sending module. This specifically depends on whether the foregoing solution performed by the communication apparatus 1900 includes a sending action and a receiving action.

In an example, the communication apparatus 1900 is configured to perform an action performed by the terminal device in the embodiment shown in FIG. 9.

The transceiver module 1902 is configured to receive configuration information from a network device, where the configuration information includes a correspondence between at least one control resource set of the communication apparatus 1900 and a TCI mode, and the TCI mode includes a joint mode or a separate mode.

The processing module 1901 is configured to determine, based on the configuration information, the TCI mode corresponding to the at least one control resource set.

In an example, the communication apparatus 1900 is configured to perform an action performed by the terminal device in the embodiment shown in FIG. 10.

The transceiver module 1902 is configured to receive configuration information from a network device, where the configuration information includes information about control resource sets that are of the communication apparatus 1900 and that are associated with M TCI state lists, the M TCI state lists include a UL TCI state list and/or a joint/DL TCI state list, and M is an integer greater than or equal to 1.

The processing module 1901 is configured to determine, based on the configuration information, TCI modes corresponding to the control resource sets associated with the M TCI state lists, where the TCI mode includes a joint mode or a separate mode.

Optionally, the processing module 1901 is further configured to perform step 1004.

In an example, the communication apparatus 1900 is configured to perform an action performed by the terminal device in the embodiment shown in FIG. 11.

The transceiver module 1902 is configured to receive first information from a network device, where the first information indicates a TCI mode associated with at least one first TCI state, and the at least one first TCI state is activated by the network device for the communication apparatus 1900.

The processing module 1901 is configured to determine, based on the first information, the TCI mode associated with the at least one first TCI state.

Optionally, the transceiver module 1902 is further configured to perform step 1104. The processing module 1901 is further configured to perform step 1105.

In an example, the communication apparatus 1900 is configured to perform an action performed by the terminal device in the embodiment shown in FIG. 12.

The transceiver module 1902 is configured to receive a MAC CE from a network device, where the MAC CE includes a first field and a second field, the first field indicates an index of a control resource set pool to which a first control resource set of the communication apparatus 1900 belongs, and the second field indicates a TCI mode associated with the first control resource set.

The processing module 1901 is configured to determine, based on the MAC CE, the TCI mode associated with the first control resource set.

In an example, the communication apparatus 1900 is configured to perform an action performed by the terminal device in the embodiment shown in FIG. 13.

The transceiver module 1902 is configured to receive a MAC CE from a network device, where the MAC CE includes a first field, the first field indicates a TCI mode associated with a first TCI state in each of N groups of TCI states, the N groups of TCI states are TCI states activated by the network device for the communication apparatus 1900, and N is an integer greater than or equal to 1.

The processing module 1901 is configured to determine, based on the MAC CE, the TCI mode associated with the first TCI state in each of the N groups of TCI states.

Optionally, the processing module 1901 is further configured to perform step 1303.

In an example, the communication apparatus 1900 is configured to perform an action performed by the terminal device in the embodiment shown in FIG. 14.

The transceiver module 1902 is configured to receive indication information from a network device, where the indication information indicates a TCI state identifier.

The processing module 1901 is configured to: determine a TCI state list to which the TCI state identifier belongs, where the TCI state list is associated with a first control resource set of the communication apparatus 1900; and determine that the TCI state identifier is a TCI state identifier corresponding to the first control resource set.

Optionally, the transceiver module 1902 is further configured to perform step 1401a and step 1401b.

In an example, the communication apparatus 1900 is configured to perform an action performed by the terminal device in the embodiment shown in FIG. 15.

The transceiver module 1902 is configured to receive a MAC CE from a network device, where the MAC CE includes a first field and a second field, the first field and the second field jointly indicate a TCI state, a length of the first field is A bits, a length of the second field is B bits, A plus B is greater than or equal to 8, and both A and B are integers greater than or equal to 1.

The processing module 1901 is configured to determine the TCI state based on the MAC CE.

In an example, the communication apparatus 1900 is configured to perform an action performed by the terminal device in the embodiment shown in FIG. 17.

The transceiver module 1902 is configured to receive a MAC CE from a network device, where the MAC CE includes one or more field groups, each field group corresponds to one codepoint, the codepoint is mapped to a plurality of TCI states, each field group includes a first field and a second field, the first field indicates whether the network device uses a TCI state of a first TRP included in the plurality of TCI states as an updated TCI state of the first TRP, the second field in each field group indicates whether the network device uses, as an updated TCI state of a second TRP, a TCI state of the second TRP included in the TCI states mapped by the codepoint corresponding to the field group.

The processing module 1901 is configured to determine, based on the MAC CE, an updated TCI state of a specific TRP corresponding to a codepoint corresponding to the one or more field groups.

It should be understood that specific processes in which the modules perform the foregoing corresponding procedures are described in detail in the foregoing method embodiments. For brevity, details are not described herein again.

In the foregoing embodiment, the processing module 1901 may be implemented by at least one processor or processor-related circuit, and the transceiver module 1901 may be implemented by a transceiver or transceiver-related circuit. The transceiver module 1902 may also be referred to as a communication module or a communication interface. The storage module may be implemented by using at least one memory.

A communication apparatus provided in embodiments of this application is described below.

FIG. 20 is a diagram of a structure of a communication apparatus according to an embodiment of this application. Refer to FIG. 20. The communication apparatus may be configured to perform the processes performed by the terminal device in the embodiments shown in FIG. 9 to FIG. 15 and FIG. 17. For details, refer to related descriptions in the foregoing method embodiments.

The communication apparatus 2000 may include a transceiver module 2001 and a processing module 2002. The transceiver module 2001 may implement a corresponding communication function, and the processing module 2002 is configured to perform data processing. The transceiver module 2001 may also be referred to as a communication interface or a communication module.

Optionally, the communication apparatus 2000 may further include a storage module. The storage module may be configured to store instructions and/or data. The processing module 2002 may read the instructions and/or the data in the storage module, so that the communication apparatus implements the foregoing method embodiments.

The communication apparatus 2000 may be configured to perform an action performed by the network device in the foregoing method embodiments. The communication apparatus 2000 may be a network device or a component that can be disposed in the network device. The transceiver module 2001 is configured to perform a receiving-related operation on a network device side in the foregoing method embodiments, and the processing module 2002 is configured to perform a processing-related operation on the network device side in the foregoing method embodiments.

Optionally, the transceiver module 2001 may include a sending module and a receiving module. The sending module is configured to perform a sending operation in the foregoing method embodiments. The receiving module is configured to perform a receiving operation in the foregoing method embodiments.

It should be noted that the communication apparatus 2000 may include a sending module, but does not include a receiving module. Alternatively, the communication apparatus 2000 may include a receiving module, but does not include a sending module. This specifically depends on whether the foregoing solution performed by the communication apparatus 2000 includes a sending action and a receiving action.

In an example, the communication apparatus 2000 is configured to perform an action performed by the network device in the embodiment shown in FIG. 9.

The processing module 2002 is configured to determine configuration information, where the configuration information includes a correspondence between at least one control resource set of a terminal device and a TCI mode, and the TCI mode includes a joint mode or a separate mode.

The transceiver module 2001 is configured to send the configuration information to the terminal device.

In an example, the communication apparatus 2000 is configured to perform an action performed by the network device in the embodiment shown in FIG. 10.

The processing module 2002 is configured to determine configuration information, where the configuration information includes information about control resource sets that are of a terminal device and that are associated with M TCI state lists, the M TCI state lists include a UL TCI state list and/or a joint/DL TCI state list, and M is an integer greater than or equal to 1.

The transceiver module 2001 is configured to send the configuration information to the terminal device.

Optionally, the processing module 2002 is further configured to perform step 1004 in the embodiment shown in FIG. 10.

In an example, the communication apparatus 2000 is configured to perform an action performed by the network device in the embodiment shown in FIG. 11.

The processing module 2002 is configured to determine first information, where the first information indicates a TCI mode associated with at least one first TCI state, and the at least one first TCI state is activated by the communication apparatus 2000 for a terminal device.

The transceiver module 2001 is configured to send the first information to the terminal device.

Optionally, the transceiver module 2001 is further configured to perform step 1104 in the embodiment shown in FIG. 11.

In an example, the communication apparatus 2000 is configured to perform an action performed by the network device in the embodiment shown in FIG. 12.

The processing module 2002 is configured to determine a MAC CE, where the MAC CE includes a first field and a second field, the first field indicates an index of a control resource set pool to which a first control resource set of a terminal device belongs, and the second field indicates a TCI mode associated with the first control resource set.

The transceiver module 2001 is configured to send the MAC CE to the terminal device.

In an example, the communication apparatus 2000 is configured to perform an action performed by the network device in the embodiment shown in FIG. 13.

The processing module 2002 is configured to determine a MAC CE, where the MAC CE includes a first field, the first field indicates a TCI mode associated with a first TCI state in each of N groups of TCI states, and the N groups of TCI states are activated by the communication apparatus 2000 for a terminal device.

The transceiver module 2001 is configured to send the MAC CE to the terminal device.

In an example, the communication apparatus 2000 is configured to perform an action performed by the network device in the embodiment shown in FIG. 14.

The processing module 2002 is configured to determine first configuration information, where the first configuration information includes a plurality of TCI state lists configured by the communication apparatus 2000 for a terminal device, the plurality of TCI state lists include P UL TCI state lists and Q DL/joint TCI state lists, TCI state identifiers in different UL TCI state lists in the P UL TCI state lists are different, and TCI state identifiers in different DL/joint TCI state lists in the Q DL/joint TCI state lists are different, where P is an integer greater than or equal to 2, and Q is an integer greater than or equal to 2.

The transceiver module 2001 configured to send the first configuration information to the terminal device.

Optionally, the transceiver module 2001 is further configured to perform step 1401b in the embodiment shown in FIG. 14.

In an example, the communication apparatus 2000 is configured to perform an action performed by the network device in the embodiment shown in FIG. 15.

The determining module 2002 is configured to determine a MAC CE, where the MAC CE includes a first field and a second field, the second field and the second field jointly indicate a TCI state, a length of the first field is A bits, a length of the second field is B bits, A plus B is greater than or equal to 8, and both A and B are integers greater than or equal to 1.

The transceiver module 2001 is configured to send the MAC CE to the terminal device.

In an example, the communication apparatus 2000 is configured to perform an action performed by the network device in the embodiment shown in FIG. 17.

The processing module 2002 is configured to determine a MAC CE, where the MAC CE includes one or more field groups, each field group corresponds to one codepoint, the codepoint is mapped to a plurality of TCI states, each field group includes a first field and a second field, the first field indicates whether the communication apparatus 2000 uses a TCI state of a first TRP included in the plurality of TCI states as an updated TCI state of the first TRP, the second field in each field group indicates whether the communication apparatus 2000 uses, as an updated TCI state of a second TRP, a TCI state of the second TRP included in the TCI states mapped by the codepoint corresponding to the field group.

The transceiver module 2001 is configured to send the MAC CE to a terminal device.

It should be understood that specific processes in which the modules perform the foregoing corresponding procedures are described in detail in the foregoing method embodiments. For brevity, details are not described herein again.

In the foregoing embodiment, the processing module 2002 may be implemented by at least one processor or processor-related circuit, and the transceiver module 2002 may be implemented by a transceiver or transceiver-related circuit. The transceiver module 2001 may also be referred to as a communication module or a communication interface. The storage module may be implemented by using at least one memory.

An embodiment of this application further provides a communication apparatus 2100. The communication apparatus 2100 includes a processor 2110. The processor 2110 is coupled to a memory 2120. The memory 2120 is configured to store a computer program or instructions and/or data. The processor 2110 is configured to execute the computer program or the instructions and/or the data stored in the memory 2120, so that the methods in the foregoing method embodiments are performed.

Optionally, the communication apparatus 2100 includes one or more processors 2110.

Optionally, as shown in FIG. 21, the communication apparatus 2100 may further include the memory 2120.

Optionally, the communication apparatus 2100 may include one or more memories 2120.

Optionally, the memory 2120 and the processor 2110 may be integrated together or separately disposed.

Optionally, as shown in FIG. 21, the communication apparatus 2100 may further include a transceiver 2130. The transceiver 2130 is configured to receive and/or send a signal. For example, the processor 2110 is configured to control the transceiver 2130 to receive and/or send the signal.

The communication apparatus 2100 is configured to implement operations performed by the terminal device or the network device in the foregoing method embodiments.

For example, the processor 2110 is configured to implement processing-related operations performed by the terminal device in the foregoing method embodiments, and the transceiver 2130 is configured to implement receiving-related and sending-related operations performed by the terminal device in the foregoing method embodiments.

For example, the processor 2110 is configured to implement processing-related operations performed by the network device in the foregoing method embodiments, and the transceiver 2130 is configured to implement receiving-related and sending-related operations performed by the network device in the foregoing method embodiments.

This application further provides a communication apparatus 2200. The communication apparatus 2200 may be a terminal device, a processor of the terminal device, or a chip. The communication apparatus 2200 may be configured to perform an operation performed by the terminal device in the foregoing method embodiments.

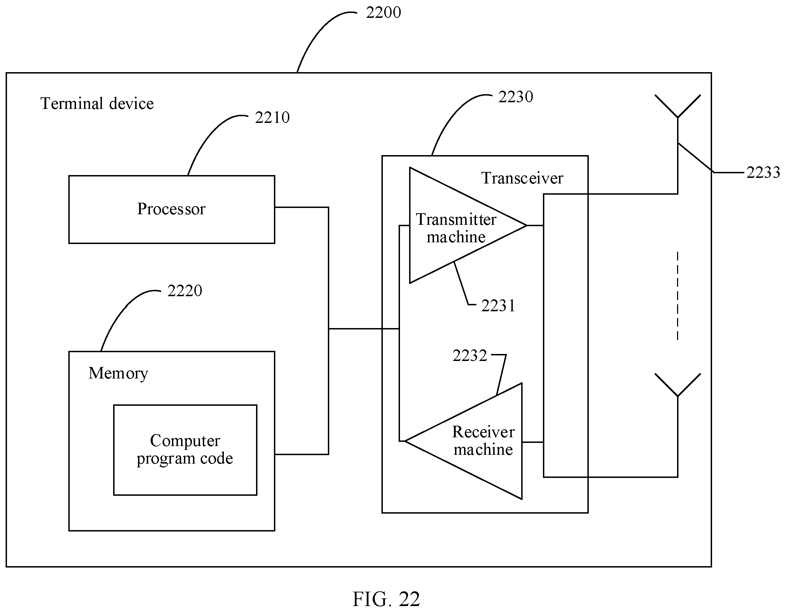

When the communication apparatus 2200 is a terminal device, FIG. 22 is a simplified diagram of a structure of the terminal device. As shown in FIG. 22, the terminal device includes a processor, a memory, and a transceiver. The memory may store computer program code. The transceiver includes a transmitter machine 2231, a receiver machine 2232, a radio frequency circuit (not shown in the figure), an antenna 2233, and an input/output apparatus (not shown in the figure).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 22 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver module of the terminal device, and the processor that has a processing function may be considered as a processing module of the terminal device.

As shown in FIG. 22, the terminal device includes a processor 2210, a memory 2220, and a transceiver 2230. The processor 2210 may also be referred to as a processing unit, a processing board, a processing module, a processing apparatus, or the like. The transceiver 2230 may also be referred to as a transceiver unit, a transceiver machine, a transceiver apparatus, or the like.

Optionally, a component for implementing a receiving function in the transceiver 2230 may be considered as a receiving module, and a component for implementing a sending function in the transceiver 2230 may be considered as a sending module. That is, the transceiver 2230 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 2210 is configured to perform a processing action on a terminal device side in the embodiment shown in FIG. 9, and the transceiver 2230 is configured to perform receiving and sending actions on the terminal device side in FIG. 9. For example, the transceiver 2230 is configured to perform step 902 in the embodiment shown in FIG. 9. The processor 2210 is configured to perform step 903 in the embodiment shown in FIG. 9.

For example, in an implementation, the processor 2210 is configured to perform a processing action on a terminal device side in the embodiment shown in FIG. 10, and the transceiver 2230 is configured to perform receiving and sending actions on the terminal device side in FIG. 10. For example, the transceiver 2230 is configured to perform step 1002 in the embodiment shown in FIG. 10. The processor 2210 is configured to perform step 1003 in the embodiment shown in FIG. 10. Optionally, the processor 2210 is further configured to perform step 1004 in the embodiment shown in FIG. 10.

For example, in an implementation, the processor 2210 is configured to perform a processing action on a terminal device side in the embodiment shown in FIG. 11, and the transceiver 2230 is configured to perform receiving and sending actions on the terminal device side in FIG. 11. For example, the transceiver 2230 is configured to perform step 1102 in the embodiment shown in FIG. 11. The processor 2210 is configured to perform step 1103 in the embodiment shown in FIG. 11. Optionally, the transceiver 2230 is further configured to perform step 1104 in the embodiment shown in FIG. 11, and the processor 2210 is further configured to perform step 1105 in the embodiment shown in FIG. 11.

For example, in an implementation, the processor 2210 is configured to perform a processing action on a terminal device side in the embodiment shown in FIG. 12, and the transceiver 2230 is configured to perform receiving and sending actions on the terminal device side in FIG. 12. For example, the transceiver 2230 is configured to perform step 1202 in the embodiment shown in FIG. 12. The processor 2210 is configured to perform step 1203 in the embodiment shown in FIG. 12.

For example, in an implementation, the processor 2210 is configured to perform a processing action on a terminal device side in the embodiment shown in FIG. 13, and the transceiver 2230 is configured to perform receiving and sending actions on the terminal device side in FIG. 13. For example, the transceiver 2230 is configured to perform step 1302 in the embodiment shown in FIG. 13. The processor 2210 is configured to perform step 1303 in the embodiment shown in FIG. 13.

Optionally, the processor 2210 is configured to perform step 1304 in the embodiment shown in FIG. 13.

For example, in an implementation, the processor 2210 is configured to perform a processing action on a terminal device side in the embodiment shown in FIG. 14, and the transceiver 2230 is configured to perform receiving and sending actions on the terminal device side in FIG. 14. For example, the transceiver 2230 is configured to perform step 1401 in the embodiment shown in FIG. 14. The processor 2210 is configured to perform step 1402 and step 1403 in the embodiment shown in FIG. 14.

Optionally, the transceiver 2230 is configured to perform step 1401a and step 1401b in the embodiment shown in FIG. 14.

For example, in an implementation, the processor 2210 is configured to perform a processing action on a terminal device side in the embodiment shown in FIG. 15, and the transceiver 2230 is configured to perform receiving and sending actions on the terminal device side in FIG. 15. For example, the transceiver 2230 is configured to perform step 1502 in the embodiment shown in FIG. 15. The processor 2210 is configured to perform step 1503 in the embodiment shown in FIG. 15.

For example, in an implementation, the processor 2210 is configured to perform a processing action on a terminal device side in the embodiment shown in FIG. 17, and the transceiver 2230 is configured to perform receiving and sending actions on the terminal device side in FIG. 17. For example, the transceiver 2230 is configured to perform step 1702 in the embodiment shown in FIG. 17. The processor 2210 is configured to perform step 1703 in the embodiment shown in FIG. 17.

It should be understood that FIG. 22 is merely an example rather than a limitation. The terminal device including the transceiver module and the processing module may not depend on the structure shown in FIG. 21 or FIG. 22.

When the communication apparatus 2200 is a chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as output of the chip, and a receiving operation performed by the terminal device in the foregoing method embodiments may be understood as input of the chip.

This application further provides a communication apparatus 2300. The communication apparatus 2300 may be a network device or a chip. The communication apparatus 2300 may be configured to perform an operation performed by the network device in the method embodiments shown in FIG. 9 to FIG. 15 and FIG. 17.

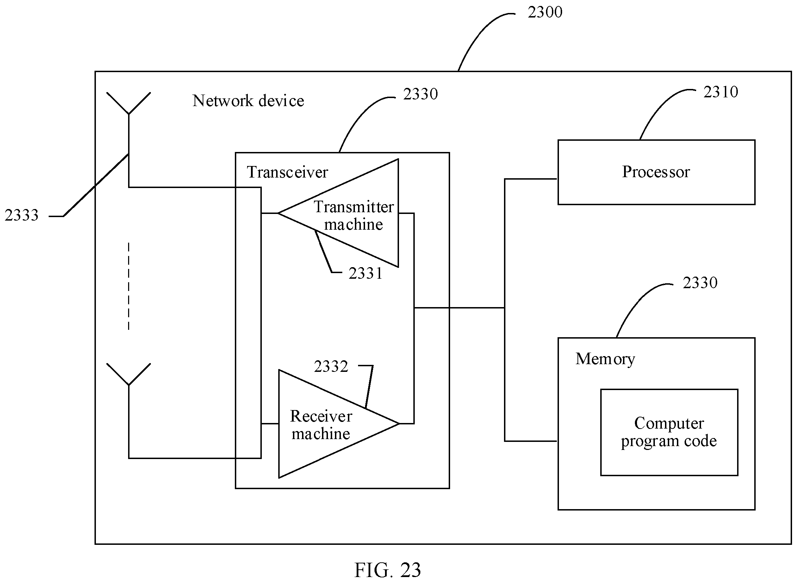

When the communication apparatus 2300 is a network device, for example, a base station, FIG. 23 is a simplified diagram of a structure of the base station. The base station includes a part 2310, a part 2320, and a part 2330. The part 2310 is mainly configured to perform baseband processing, control the base station, and the like. The part 2310 is usually a control center of the base station, may be usually referred to as a processor, and is configured to control the base station to perform a processing operation on a network device side in the foregoing method embodiments. The part 2320 is mainly configured to store computer program code and data. The part 2330 is mainly configured to receive and send a radio frequency signal, and perform conversion between the radio frequency signal and a baseband signal. The part 2330 may be usually referred to as a transceiver module, a transceiver machine, a transceiver circuit, a transceiver, or the like. The transceiver module in the part 2330 may also be referred to as a transceiver machine, a transceiver, or the like, and includes an antenna 2333 and a radio frequency circuit (not shown). The radio frequency circuit is mainly configured to perform radio frequency processing. Optionally, in the part 2330, a component configured to implement a receiving function may be considered as a receiver machine, and a component configured to implement a sending function may be considered as a transmitter machine. In other words, the part 2330 includes a receiver machine 2332 and a transmitter machine 2331. The receiver machine may also be referred to as a receiving module, a receiver, a receiver circuit, or the like, and the transmitter machine may be referred to as a transmitting module, a transmitter, a transmitter circuit, or the like.

The part 2310 and the part 2320 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver module in the part 2330 is configured to perform receiving-related and sending-related processes performed by the network device in the embodiments shown in FIG. 9 to FIG. 15 and FIG. 17. The processor in the part 2310 is configured to perform a processing-related process performed by the network device in the embodiments shown in FIG. 9 to FIG. 15 and FIG. 17. In another implementation, the transceiver module in the part 2330 is configured to perform receiving-related and sending-related processes performed by the network device in the embodiments shown in FIG. 9 to FIG. 15 and FIG. 17.

It should be understood that FIG. 23 is merely an example rather than a limitation, and the network device including the processor, the memory, and the transceiver may not depend on the structure shown in FIG. 21 or FIG. 23.

When the communication apparatus 2300 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as output of the chip, and a receiving operation performed by the network device in the foregoing method embodiments may be understood as input of the chip.

An embodiment of this application further provides a computer-readable storage medium. The computer-readable storage medium stores computer instructions used to implement the method performed by the terminal device or the network device in the foregoing method embodiments.

For example, when a computer program is executed by a computer, the computer is enabled to implement the method performed by the terminal device or the network device in the foregoing method embodiments.

An embodiment of this application further provides a computer program product including instructions. When the instructions are executed by a computer, the computer is enabled to implement the method performed by the terminal device or the network device in the foregoing method embodiments.

An embodiment of this application further provides a communication system. The communication system includes the terminal device and the network device in the foregoing embodiments.

An embodiment of this application further provides a chip apparatus, including a processor, configured to invoke a computer program or computer instructions stored in a memory, so that the processor performs the methods in the embodiments shown in FIG. 9 to FIG. 15 and FIG. 17.

In a possible implementation, input of the chip apparatus corresponds to a receiving operation in the embodiments shown in FIG. 9 to FIG. 15 and FIG. 17, and output of the chip apparatus corresponds to a sending operation in the embodiments shown in FIG. 9 to FIG. 15 and FIG. 17.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more integrated circuits configured to control program execution of the methods in the embodiments shown in FIG. 9 to FIG. 15 and FIG. 17. Any memory mentioned above may be a read-only memory (read-only memory, ROM), another type of static storage device that can store static information and instructions, a random access memory (random access memory, RAM), or the like.

It may be clearly understood by persons skilled in the art that, for convenient and brief description, for explanations and beneficial effects of related content in any one of the communication apparatuses provided above, refer to the corresponding method embodiments provided above. Details are not described herein again.

In several embodiments provided in this application, it should be understood that the disclosed system, apparatus, and method may be implemented in other manners. For example, the apparatus embodiments described above are merely schematic. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A transmission configuration indicator TCI mode configuration method, wherein the method comprises:
receiving, by a terminal device, configuration information from a network device, wherein the configuration information comprises a correspondence between at least one control resource set of the terminal device and a TCI mode, and the TCI mode comprises a joint mode or a separate mode; and
determining, by the terminal device based on the configuration information, the TCI mode corresponding to the at least one control resource set.

2. A transmission configuration indicator TCI mode configuration method, wherein the method comprises:
determining, by a network device, configuration information, wherein the configuration information comprises a correspondence between at least one control resource set of a terminal device and a TCI mode, and the TCI mode comprises a joint mode or a separate mode; and
sending, by the network device, the configuration information to the terminal device.

3. The method according to claim 1 or 2, wherein the at least one control resource set belongs to at least one control resource set pool, and the configuration information comprises a correspondence between an index of the at least one control resource set pool and the TCI mode.

4. The method according to any one of claims 1 to 3, wherein each of the at least one control resource set corresponds to one TCI mode.

5. A transmission configuration indicator TCI mode configuration method, wherein the method comprises:
receiving, by a terminal device, configuration information from a network device, wherein
the configuration information comprises information about control resource sets associated with M transmission configuration indicator TCI state lists, the M TCI state lists comprise an uplink transmission configuration indicator UL TCI state list and/or a joint or downlink transmission configuration indicator joint/DL TCI state list, and M is an integer greater than or equal to 1; and
determining, by the terminal device based on the configuration information, TCI modes corresponding to the control resource sets associated with the M TCI state lists, wherein the TCI mode comprises a joint mode or a separate mode.

6. A transmission configuration indicator TCI mode configuration method, wherein the method comprises:
determining, by a network device, configuration information, wherein
the configuration information comprises information about control resource sets that are of a terminal device and that are associated with M transmission configuration indicator TCI state lists, the M TCI state lists comprise an uplink transmission configuration indicator UL TCI state list and/or a joint or downlink transmission configuration indicator joint/DL TCI state list, and M is an integer greater than or equal to 1; and
sending, by the network device, the configuration information to the terminal device.

7. The method according to claim 5 or 6, wherein the control resource sets associated with the M TCI state lists belong to one or more control resource set pools, and the configuration information comprises an index of the one or more control resource set pools.

8. The method according to any one of claims 5 to 7, wherein the control resource sets associated with the M TCI state lists comprise a first control resource set; and
if a TCI mode associated with the first control resource set is a separate mode, the first control resource set is associated with one UL TCI state list and one joint/DL TCI state list in the M TCI state lists; or
if a TCI mode associated with the first control resource set is a joint mode, the first control resource set is associated with one joint/DL TCI state list in the M TCI state lists.

9. The method according to claim 5, 7, or 8, wherein the method further comprises:
determining, by the terminal device, that a second control resource set is associated with a first TCI mode, wherein
the first TCI mode is a TCI mode configured for a cell in which the terminal device is located, and the second control resource set is a control resource set of the terminal device other than the control resource sets associated with the M TCI state lists.

10. A transmission configuration indicator TCI mode configuration method, wherein the method comprises:
receiving, by a terminal device, first information from a network device, wherein the first information indicates a TCI mode associated with at least one first TCI state, and the at least one first TCI state is activated by the network device for the terminal device; and
determining, by the terminal device based on the first information, the TCI mode associated with the at least one first TCI state.

11. A transmission configuration indicator TCI mode configuration method, wherein the method comprises:
determining, by a network device, first information, wherein the first information indicates a TCI mode associated with at least one first TCI state, and the at least one first TCI state is activated by the network device for a terminal device; and
sending, by the network device, the first information to the terminal device.

12. The method according to claim 11, wherein the method further comprises:
sending, by the network device, second information to the terminal device, wherein the second information indicates a TCI mode associated with at least one second TCI state, and the at least one second TCI state is activated by the network device for the terminal device.

13. The method according to claim 10, wherein the method further comprises:
receiving, by the terminal device, second information from the network device, wherein the second information indicates a TCI mode associated with at least one second TCI state, and the at least one second TCI state is activated or indicated by the network device for the terminal device; and
determining, by the terminal device based on the second information, the TCI mode associated with the at least one second TCI state.

14. The method according to claim 12 or 13, wherein the at least one first TCI state and the at least one second TCI state are activated by the network device for the terminal device by using a same media access control control element MAC CE or same downlink control information DCI, and the at least one first TCI state and the at least one second TCI state form at least one group of TCI states;
a quantity of first TCI states comprised in each group of TCI states in the at least one group of TCI states is determined based on the TCI mode associated with the at least one first TCI state; and
a quantity of second TCI states comprised in each group of TCI states in the at least one group of TCI states is determined based on the TCI mode associated with the at least one second TCI state.

15. The method according to claim 14, wherein if the at least one first TCI state is associated with a joint mode and the at least one second TCI state is associated with a separate mode, each group of TCI states in the at least one group of TCI states comprises one first TCI state and one or two second TCI states;
if the at least one first TCI state is associated with a separate mode and the at least one second TCI state is associated with a joint mode, each group of TCI states in the at least one group of TCI states comprises one or two first TCI states and one first TCI state;
if the at least one first TCI state and the at least one second TCI state are both associated with a joint mode, each group of TCI states in the at least one group of TCI states comprises one first TCI state and one second TCI state; or
if the at least one first TCI state and the at least one second TCI state are both associated with a separate mode, each group of TCI states in the at least one group of TCI states comprises one or two first TCI states and one or two second TCI states.

16. A transmission configuration indicator TCI mode configuration method, wherein the method comprises:
receiving, by a terminal device, a media access control control element MAC CE from a network device, wherein the MAC CE comprises a first field and a second field, the first field indicates an index of a control resource set pool to which a first control resource set of the terminal device belongs, and the second field indicates a TCI mode associated with the first control resource set; and
determining, by the terminal device based on the MAC CE, the TCI mode associated with the first control resource set.

17. A transmission configuration indicator TCI mode configuration method, wherein the method comprises:
determining, by a network device, a media access control control element MAC CE, wherein the MAC CE comprises a first field and a second field, the first field indicates an index of a control resource set pool to which a first control resource set of a terminal device belongs, and the second field indicates a TCI mode associated with the first control resource set; and
sending, by the network device, the MAC CE to the terminal device.

18. A transmission configuration indicator TCI mode configuration method, wherein the method comprises:
receiving, by a terminal device, a media access control control element MAC CE from a network device, wherein
the MAC CE comprises a first field, the first field indicates a TCI mode associated with a first TCI state in each of N groups of TCI states, the N groups of TCI states are TCI states activated by the network device for the terminal device, and N is an integer greater than or equal to 1; and
determining, by the terminal device based on the MAC CE, the TCI mode associated with the first TCI state in each of the N groups of TCI states.

19. A transmission configuration indicator TCI mode configuration method, wherein the method further comprises:
determining, by a network device, a media access control control element MAC CE, wherein
the MAC CE comprises a first field, the first field indicates a TCI mode associated with a first TCI state in each of N groups of TCI states, and the N groups of TCI states are activated by the network device for a terminal device; and
sending, by the network device, the MAC CE to the terminal device.

20. The method according to claim 18 or 19, wherein the MAC CE further comprises a second field, and the second field indicates a TCI mode associated with a second TCI state in each of the N groups of TCI states.

21. A communication apparatus, wherein the communication apparatus comprises a transceiver module and a processing module, wherein
the transceiver module is configured to perform receiving and sending operations according to any one of claims 1 to 3 or claim 4, and the processing module is configured to perform a processing operation according to any one of claims 1 to 3 or claim 4;
the transceiver module is configured to perform receiving and sending operations according to any one of claims 2 to 4, and the processing module is configured to perform a processing operation according to any one of claims 2 to 4;
the transceiver module is configured to perform receiving and sending operations according to any one of claim 5 or claims 7 to 9, and the processing module is configured to perform a processing operation according to any one of claim 5 or claims 7 to 9;
the transceiver module is configured to perform receiving and sending operations according to any one of claims 6 to 9, and the processing module is configured to perform a processing operation according to any one of claims 6 to 9;
the transceiver module is configured to perform receiving and sending operations according to any one of claim 10 or claims 13 to 15, and the processing module is configured to perform a processing operation according to any one of claim 10 or claims 13 to 15;
the transceiver module is configured to perform receiving and sending operations according to any one of claims 11 to 15, and the processing module is configured to perform a processing operation according to any one of claims 11 to 15;
the transceiver module is configured to perform receiving and sending operations according to claim 16, and the processing module is configured to perform a processing operation according to claim 16;
the transceiver module is configured to perform receiving and sending operations according to claim 17, and the processing module is configured to perform a processing operation according to claim 17;
the transceiver module is configured to perform receiving and sending operations according to claim 18 or 20, and the processing module is configured to perform a processing operation according to claim 18 or 20; or
the transceiver module is configured to perform receiving and sending operations according to claim 19 or 20, and the processing module is configured to perform a processing operation according to claim 19 or 20.

22. A communication apparatus, wherein the communication apparatus comprises a processor, and the processor is configured to execute a computer program or computer instructions in a memory, to perform the method according to any one of claims 1 to 3, 4, 5, 7 to 9, 10, 13 to 15, 16, 18, and 20, or to perform the method according to any one of claims 2 to 4, 6 to 9, 11 to 15, 17, 19, and 20.

23. A computer-readable storage medium, wherein the computer-readable storage medium stores a computer program; and when the computer program is executed by a communication apparatus, the communication apparatus performs the method according to any one of claims 1 to 3, 4, 5, 7 to 9, 10, 13 to 15, 16, 18, and 20, or the communication apparatus performs the method according to any one of claims 2 to 4, 6 to 9, 11 to 15, 17, 19, and 20.
